# EUROPÄISCHE PATENTSCHRIFT

(11) **EP 4 423 163 B1**
(45) Veröffentlichungstag und Bekanntmachung des Hinweises auf die Patenterteilung: **25.06.2025**
(21) Anmeldenummer: 22809038.7
(22) Anmeldetag: 23.10.2022
(51) Int. Cl.: C08G 59/50

(54) **BIOBASIERTER AMINHÄRTER FÜR HÄRTBARE ZUSAMMENSETZUNGEN**
BIOBASED AMINE CURING AGENT FOR CURABLE COMPOSITIONS
DURCISSEUR AMINE D'ORIGINE BIOLOGIQUE POUR COMPOSITIONS DURCISSABLES

(30) Priorität: 29.10.2021 EP 21205682
(43) Veröffentlichungstag der Anmeldung: 04.09.2024
(73) Patentinhaber: Sika Technology AG, 6340 Baar (CH)
(72) Erfinder: HUBER, Michael, 8001 Zürich (CH); KASEMI, Edis, 8046 Zürich (CH); HÄFLIGER, Florian, 8050 Zürich (CH)
(74) Vertreter: Sika Patent Attorneys
(86) Internationale Anmeldenummer: PCT/EP2022/079489
(87) Internationale Veröffentlichungsnummer: WO 2023/072786

(56) Entgegenhaltungen:
- EP-A1- 3 110 870
- NABIPOUR HAFEZEH ET AL: "Fully bio-based epoxy resin derived from vanillin with flame retardancy and degradability", REACTIVE AND FUNCTIONAL POLYMERS, ELSEVIER, AMSTERDAM, NL, vol. 168, 8 September 2021 (2021-09-08), XP086843237, ISSN: 1381-5148, [retrieved on 20210922], DOI: 10.1016/J.REACTFUNCTPOLYM.2021.105034
- HAYUN H. ET AL: "SYNTHESIS AND ANTIOXIDANT ACTIVITY STUDY OF NEW MANNICH BASES DERIVED FROM VANILLIC ACID", RASAYAN JOURNAL OF CHEMISTRY, vol. 13, no. 01, 1 January 2020 (2020-01-01), India, pages 131 - 138, XP055885970, ISSN: 0974-1496, DOI: 10.31788/RJC.2020.1315300

## Beschreibung

### Technisches Gebiet

Die Erfindung betrifft das Gebiet der Polyamine auf Basis nachwachsender Rohstoffe, Verfahren zu deren Herstellung und die Verwendung als Härter für härtbare Zusammensetzungen, insbesondere für Epoxidharze.

### Stand der Technik

Mehrfunktionelle Amine dienen als Härter für Kunststoffe und Kunststoff-Zusammensetzungen, beispielsweise auf der Basis von Epoxidharzen, Polyurethanen, Polyharnstoffen, Polyacrylaten oder Polyamiden, für eine breite Palette von Anwendungen in der Industrie und im Bauwesen. Der Aminhärter hat dabei einen entscheidenden Einfluss auf die Eigenschaften des Kunststoffs und muss hohe Anforderungen erfüllen. Beispielsweise für Epoxidharze soll der Aminhärter eine gute Verarbeitbarkeit und eine schnelle, störungsfreie Aushärtung ermöglichen und zu ausgehärteten Kunststoff-Produkten von hoher Qualität führen, etwa in Bezug auf das äussere Erscheinungsbild, Glasübergangstemperatur, Wasserresistenz, Härte, Sprödigkeit oder Haftungsvermögen. Die aus dem Stand der Technik bekannten Aminhärter für Epoxidharze wie beispielsweise 1,3-Bis(aminomethyl)benzol, 1,3-Bis(aminomethyl)cyclohexan, Isophorondiamin oder N-Benzyl-1,2-ethandiamin sind verbesserungsfähig in Bezug auf Verarbeitbarkeit, Offenzeit, Aushärtegeschwindigkeit, störungsfreie Aushärtung und/oder Qualität der Oberfläche.

Heutzutage werden vermehrt Kunststoff-Produkte nachgefragt, welche nachhaltig sind. Insbesondere sollen sie einen hohen Gehalt an Rohstoffen aus erneuerbaren Quellen enthalten, also zu einem hohen Anteil biobasiert sein. Ein gebräuchliches Mass für die Nachhaltigkeit von chemischen Rohstoffen ist der Renewable Carbon Index (RCI), welcher den Kohlenstoffanteil aus erneuerbaren Quellen angibt. Er ergibt sich durch Division der Anzahl Kohlenstoffatome aus einer erneuerbaren Quelle mit der gesamten Anzahl Kohlenstoffatome im Rohstoff. Während biobasierte Epoxidharze wie beispielsweise Glycerol-Triglyciylether oder Vanillinalkohol-Diglycidylether bekannt sind, ist die Auswahl an biobasierten Aminhärtern noch unbefriedigend und ihre Eigenschaften sind im Vergleich zu petrobasierten Aminhärtern mangelhaft.

Aus US 9,676,898 oder WO 2015/124792 sind Furan-basierte Aminhärter bekannt. Deren Ausgangstoffe sind aber schwierig verfügbar und/oder sie sind anfällig für Blushing und/oder mangelhaft in Bezug auf Verdünnungswirkung.

Es besteht somit Bedarf nach weiteren biobasierten Aminhärtern mit verbesserten Eigenschaften.

### Darstellung der Erfindung

Aufgabe der vorliegenden Erfindung ist es daher, nachhaltige Aminhärter für Kunststoffe und Kunststoff-Zusammensetzungen zur Verfügung zu stellen, welche im Vergleich zu bekannten petrobasierten Aminhärtern nicht nur gleichwertige, sondern sogar bessere Eigenschaften ermöglichen, insbesondere in Bezug auf Verarbeitbarkeit und Aushärteverhalten.

Überraschenderweise wird diese Aufgabe mit einem Härter enthaltend mindestens ein Amin der Formel (I) wie in Anspruch 1 beschrieben gelöst. Amine der Formel (I) sind ausgehend von Vanillin oder Guajacol zugänglich, welche aus biobasierten Quellen verfügbar sind. Der erfindungsgemässe Härter ist geeignet für Kunststoffe und Kunststoff-Zusammensetzungen, insbesondere auf Basis von Epoxidharzen, Polyisocyanaten, Polyacrylaten oder Polyamiden. Er ermöglicht biobasierte Kunststoff-Produkte, welche den petrobasierten nicht nur in Bezug auf Nachhaltigkeit, sondern auch in der technischen Leistungsfähigkeit überlegen sind. Insbesondere in Epoxidharz-Produkten kann der Härter übliche und breit eingesetzte petrobasierte Aminhärter oder Beschleuniger wie MXDA oder 2,4,6-Tris-(dimethylaminomethyl)phenol ersetzen und ermöglicht dabei zusätzliche Vorteile. Der erfindungsgemässe Härter ist überraschend gut verträglich mit den üblicherweise verwendeten Epoxidharzen wie Bisphenol A-Diglycidylether oder dem biobasierten Vanillinalkohol-Diglycidylether. Im Vergleich zu 1,3-Bis(aminomethyl)phenol (MXDA) ermöglicht er eine deutlich schnellere Aushärtung bei deutlich weniger Oberflächenstörungen durch Blushing-Effekte, und im Vergleich zu 2,4,6-Tris(dimethylaminomethyl)phenol ermöglicht er eine höhere Aushärtegeschwindigkeit bei geringerer Geruchsbelastung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung eines Härters enthaltend mindestens ein Amin der Formel (I) zum Vernetzen von aminreaktiven Verbindungen, 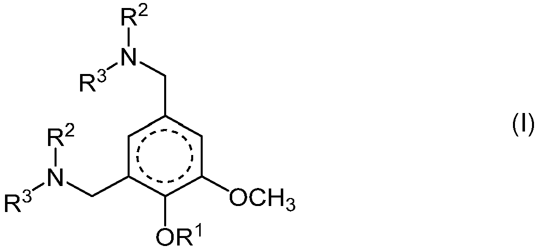 wobei 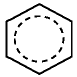 für einen Benzolring oder Cyclohexanring steht,
R¹ für H oder einen Alkylrest mit 1 bis 6 C-Atomen steht,
R² für H oder einen einwertigen organischen Rest mit 1 bis 6 C-Atomen oder einen Aminoalkylrest mit 2 bis 10 C-Atomen oder einen N-substituierten Aminoalkylrest mit 2 bis 10 C-Atomen steht, und
R³ für H oder Methyl steht.

Als "aminreaktive Verbindung" wird eine Substanz mit Reaktivgruppen bezeichnet, welche mit Aminogruppen reagieren kann und unter dem Einfluss des Härters Kettenaufbau- und Vernetzungsreaktionen eingeht, die schliesslich zur Aushärtung führen.

Als "RCI" wird der "Renewable Carbon Index" einer Substanz oder einer Mischung von Substanzen bezeichnet, wobei der RCI für das Verhältnis der Anzahl C-Atome aus biobasierter Quelle zur gesamten Anzahl C-Atome der Substanz oder der Mischung von Substanzen steht.

Mit "Poly" beginnende Substanznamen wie Polyepoxid oder Polyisocyanat bezeichnen Substanzen, die formal zwei oder mehr der in ihrem Namen vorkommenden funktionellen Gruppen pro Molekül enthalten.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Amingruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet. Es wird angegeben in der Masseinheit "g/eq".

Als "Epoxid-Equivalentgewicht" wird die Masse einer Epoxidgruppen-haltigen Verbindung oder Zusammensetzung bezeichnet, die ein Mol-Equivalent Epoxidgruppen enthält. Es wird angegeben in der Masseinheit "g/eq".

Als "Verdünner" wird eine in einem Epoxidharz lösliche und dessen Viskosität senkende Substanz bezeichnet, welche bei der Aushärtung chemisch nicht in das Epoxidharz-Polymer eingebunden wird.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen, sofern nicht anders angegeben.

Gewichtsprozente (Gewichts-%) bezeichnen Massenanteile eines Bestandteils einer Zusammensetzung bezogen auf die gesamte Zusammensetzung, falls nichts anderes angegeben ist. Die Begriffe "Masse" und "Gewicht" werden im vorliegenden Dokument synonym benutzt.

Aminrekative Verbindungen enthalten Reaktivgruppen wie insbesondere Epoxidgruppen, Isocyanatgruppen, Acrylatgruppen, Methacrylatgruppen, Acrylamidgruppen, Methacrylamidgruppen, Carbonsäuregruppen, Carbonsäureestergruppen, Acetoacetatgruppen, 1,3-Diketogruppen, Carbonatgruppen oder Lactongruppen. Dabei kann das Amin der Formel (I) bei der Vernetzung ins entstehende Polymernetzwerk eingebaut werden, oder es kann als Katalysator für die Vernetzung der aminreaktiven Verbindung durch Homopolymerisation wirken.

Bevorzugt ist die aminreaktive Verbindung ein Epoxidharz, ein Polyisocyanat, ein Poly(meth)acrylat, eine Polycarbonsäure oder ein Carbonsäureanhydrid.

Geeignete Epoxidharze sind insbesondere aromatische Epoxidharze, insbesondere die Glycidylether von:
- Bisphenol A, Bisphenol F oder Bisphenol A/F, wobei A für Aceton und F für Formaldehyd steht, welche als Edukte zur Herstellung dieser Bisphenole dienten. Im Fall von Bisphenol F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzcatechin;
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)-heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]-benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylenbis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.

Weitere geeignete Epoxidharze sind Epoxidharze mit einem hohen RCI, insbesondere solche aus der Umsetzung von biobasierten hydroxyfunktionellen Rohstoffen mit biobasiertem Epichlorhydrin. Besonders bevorzugt sind Vanillinbasierte Epoxidharze wie insbesondere Vanillinalkohol-Diglycidylether oder die Glycidylether von Bisvanillin-Derivaten, sowie Glycerol-basierte Epoxidharze wie insbesondere die Glycidylether von Glycerol oder Polyglycerol.

Bevorzugt ist das Epoxidharz ein Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25 °C bezeichnet.

Gegebenenfalls enthält die Harz-Komponente zusätzlich Anteile von Epoxid-Festharz.

Das Epoxidharz ist insbesondere ein Flüssigharz auf der Basis eines Bisphenols oder Novolaks, insbesondere mit einem mittleren Epoxid-Equivalentgewicht im Bereich von 156 bis 210 g/eq.

Geeignete Polyisocyanate sind insbesondere Diisocyanate, Oligomere oder Derivate von Diisocyanaten oder Isocyanatgruppen-haltige Polymere, insbesondere aus der Umsetzung von Polyolen mit Diisocyanaten.

Geeignete Diisocyanate sind insbesondere 1,6-Hexamethylendiisocyanat (HDI), 2,2,4- und/oder 2,4,4-Trimethyl-1,6-hexamethylendiisocyanat (TMDI), 1-Methyl-2,4(6)-diisocyanatocyclohexan (H₆TDI), Isophorondiisocyanat (IPDI), Perhydro-4(2),4'-diphenylmethandiisocyanat (H₁₂MDI), 4(2),4'-Diphenylmethandiisocyanat (MDI) oder 2,4(6)-Toluendiisocyanat.

Geeignete Oligomere oder Derivate von Diisocyanaten sind insbesondere Oligomere oder Derivate abgeleitet von HDI, IPDI, MDI oder TDI, welche insbesondere Uretdion-, Isocyanurat-, Iminooxadiazindion-, Ester-, Harnstoff-, Urethan-, Biuret-, Allophanat-, Carbodiimid-, Uretonimin- und/oder Oxadiazintrion-Gruppen enthalten, insbesondere HDI-Biurete, HDI-Isocyanurate, HDI-Uretdione, HDI-Iminooxadiazindione, HDI-Allophanate, IPDI-Isocyanurate, TDI-Oligomere oder gemischte Isocyanurate auf Basis TDI/HDI, oder bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, sowie MDI-Homologe oder deren Gemische mit MDI (polymeres MDI oder PMDI). Insbesondere weisen sie eine mittlere NCO-Funktionalität von 2.1 bis 4.0 auf.

Geeignete Isocyanatgruppen-haltige Polymere sind insbesondere abgeleitet von Polyetherpolyolen, Polyesterpolyolen, Polycarbonatpolyolen, Poly(meth)acrylatpolyolen, Polybutadienpolyolen oder Polyhydroxy-funktionellen Fetten und Ölen mit HDI, IPDI, H₁₂MDI, MDI oder TDI**.** Insbesondere weisen die Polyole eine mittlere OH-Funktionalität von 1.6 bis 3 auf. Insbesondere weisen die Polymere ein mittleres Molekulargewicht von 1'000 bis 15'000 g/mol auf. Insbesondere weisen die Polymere einen Gehalt an Isocyanatgruppen von 0.5 bis 30 Gewichts-%, bevorzugt 1 bis 25 Gewichts-%, besonders bevorzugt 2 bis 20 Gewichts-%, auf. Insbesondere sind die Polymere hergestellt mit einem NCO/OH-Verhältnis im Bereich von 1.5/1 bis 10/1. Gegebenenfalls wurden nicht umgesetzte monomere Diisocyanate aus dem Polymer entfernt.

Geeignete Poly(meth)acrylate sind insbesondere Ethylenglykoldi(meth)acrylat, Tetraethylenglykoldi(meth)acrylat, Tripropylenglykoldi(meth)acrylat, Polyethylenglykoldi(meth)acrylat oder Polypropylenglykoldi(meth)acrylat, insbesondere mit einem mittleren Molekulargewicht von 200 bis 2'000 g/mol, 1,4-Butandioldi(meth)-acrylat, 1,6-Hexandioldi(meth)acrylat, Neopentylglykoldi(meth)acrylat, Trimethylolpropantri(meth)acrylat, Pentaerythritoltetra(meth)acrylat, Dipentaerythritoltetra(meth)acrylat, Dipentaerythritolpenta(meth)acrylat, Dipentaerythritolhexa-(meth)acrylat, Tris(2-hydroxyethyl)isocyanurattri(meth)acrylat, Tris(2-hydroxyethyl)cyanurattri(meth)acrylat, zwei- oder mehrwertige Acryl- oder Methacrylfunktionelle Polybutadiene oder Polyisoprene oder Blockcopolymere davon, zwei- oder mehrwertige Polyurethan(meth)acrylate, insbesondere Umsetzungsprodukte von Isocyanatgruppen-haltigen Polymeren, insbesondere mit einem mittleren Molekulargewicht von 500 bis 20'000 g/mol, mit Hydroxy-funktionellen (Meth)acrylaten wie insbesondere 2-Hydroxyethylacrylat.

Geeignete Polycarbonsäuren sind insbesondere Oxalsäure, Malonsäure, Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Methylhexahydrophthalsäure, Hexahydroterephthalsäure, Dimerfettsäuren, 3,6,9-Trioxaundecandisäure oder Dicarbonsäuren von höhermolekularen Polyethylenglykolen, Zitronensäure, Phthalsäure, Isophthalsäure oder Terephthalsäure.

Geeignete Carbonsäureanhydride sind insbesondere Bernsteinsäureanhydrid, Maleinsäureanhydrid, Hexahydrophthalsäureanhydrid, Methylhexahydrophthalsäureanhydrid, Tetrahydrophthalsäureanhydrid, Phthalsäureanhydrid, Methylphthalsäureanhydrid, Trimellitsäureanhydrid, Pyromellitsäuredianhydrid oder 4,4'-[(Isopropyliden)-bis(p-phenylenoxy)]diphthalsäuredianhydrid.

Besonders bevorzugt ist die aminreaktive Verbindung ein Epoxidharz. Als Bestandteil eines Härters für Epoxidharze ermöglicht das Amin der Formel (I) besonders vorteilhafte Eigenschaften.

Besonders geeignet als Epoxidharz ist ein Bisphenol A-Diglycidylether und/oder Bisphenol F-Diglycidylether, wie sie kommerziell beispielsweise von Olin, Huntsman oder Momentive erhältlich sind. Diese Flüssigharze weisen eine für Epoxidharze niedrige Viskosität auf und ermöglichen eine schnelle Aushärtung und hohe Härten. Sie können Anteile von Bisphenol A-Festharz oder Novolak-Epoxidharzen enthalten.

Ganz besonders bevorzugt ist ein Bisphenol A-Diglycidylether mit einem RCI von 0.3 aus der Umsetzung von Bisphenol A mit biobasiertem Epichlorhydrin. Dies ermöglicht eine besonders nachhaltige Epoxidharz-Zusammensetzung. Weiterhin besonders geeignet als Epoxidharz sind Phenol-Formaldehyd Novolak-Glycidylether, insbesondere mit einer mittleren Funktionalität im Bereich von 2.3 bis 4, bevorzugt 2.5 bis 3. Sie können Anteile von weiteren Epoxidharzen enthalten, insbesondere Bisphenol A-Diglycidylether oder Bisphenol F-Diglycidylether. Weiterhin besonders geeignet als Epoxidharz sind Vanillinalkohol-Diglycidylether oder die Glycidylether von Glycerol oder Polyglycerol, insbesondere Vanillinalkohol-Diglycidylether.

Bevorzugt steht R¹ für einen Alkylrest mit 1 bis 6 C-Atomen, insbesondere für Methyl. Ein solches Amin der Formel (I) ermöglicht besonders niedrigviskose härtbare Zusammensetzungen.

Bevorzugt wird ein solches Amin der Formel (I) hergestellt ausgehend von Vanillin (4-Hydroxy-2-methoxybenzaldehyd), bei welchem die freie ortho-Position zur Phenolgruppe mit einer Formylgruppe aus Hexamethylentetramin in einer Duff-Reaktion zu 5-Formylvanillin alkyliert wird, anschliessend die Phenolgruppe alkyliert wird, und schliesslich der erhaltene Dialdehyd der Formel (II) mit einem Amin der Formel (III) oder Hydroxylamin reduktiv aminiert wird, wobei R¹, R² und R³ die genannten Bedeutungen aufweisen.

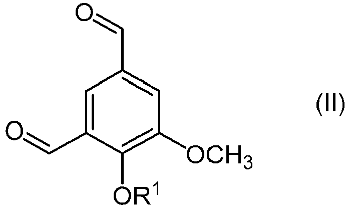

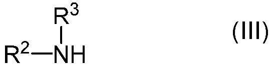

In einer bevorzugten Ausführungsform der Erfindung stehen R² und R³ beide für H. Ein solches Amin der Formel (I) ist ein primäres Diamin und besonders geeignet als Härter. Es ermöglicht eine besonders schnelle Aushärtung, eine besonders hohe Endhärte.

Bevorzugt steht R¹ dabei für Methyl und das Amin der Formel (I) steht somit für 1,3-Bis(aminomethyl)-4,5-dimethoxybenzol (la) oder 1,3-Bis(aminomethyl)-4,5-dimethoxycyclohexan (Ib).

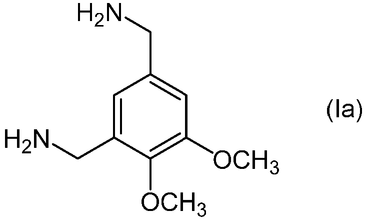

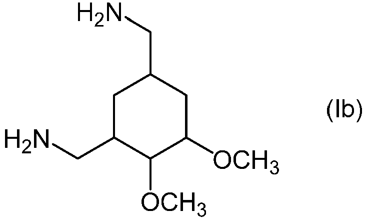

Ein solches Amin der Formel (I) ermöglicht härtbare Zusammensetzungen mit schneller Aushärtung und hoher Endhärte, insbesondere auch Epoxidharz-Produkte mit einer hohen Glasübergangstemperatur.

1,3-Bis(aminomethyl)-4,5-dimethoxybenzol (la) ist bei Raumtemperatur flüssig und ermöglicht bei der Vernetzung von Epoxidharzen im Vergleich zum petrobasierten 1,3-Bis(aminomethyl)phenol (MXDA) eine schnellere Aushärtung bei deutlich weniger Oberflächenstörungen durch Blushing-Effekte.

1,3-Bis(aminomethyl)-4,5-dimethoxycyclohexan (Ib) ist bei Raumtemperatur flüssig und ermöglicht eine hohe Lichtstabilität bei geringer Neigung zum Vergilben und eine überraschend schnelle Aushärtung mit Epoxidharzen.

Die Amine der Formel (la) oder (Ib) sind insbesondere erhältlich aus der reduktiven Aminierung des entsprechenden Dialdehyds der Formel (II) mit Ammoniak oder Hydroxylamin, wobei die Hydrierbedingungen so gewählt werden, dass der Benzolring dabei weitgehend nicht hydriert wird und das Amin der Formel (la) entsteht, oder der Benzolring dabei weitgehend ebenfalls hydriert wird und das Amin der Formel (Ib) entsteht.

In einer weiteren bevorzugten Ausführungsform der Erfindung stehen R³ für H und R² für einen einwertigen organischen Rest mit 1 bis 6 C-Atomen, insbesondere für Methyl, Ethyl, Propyl, Isopropyl, Butyl, Isobutyl, Cyclohexyl, Benzyl, Furfuryl oder Tetrahydrofurfuryl. Bevorzugt steht R¹ dabei für Methyl. Ein solches Amin der Formel (I) ermöglicht eine besonders lange Offenzeit, eine besonders geringe Exothermie bei der Aushärtung und im Fall einer Epoxidharz-Zusammensetzung eine besonders geringe Neigung zu Blushing-Effekten.

Besonders bevorzugt stehen dabei R² für Furfuryl oder Tetrahydrofurfuryl und R³ für H.

Bevorzugt steht R¹ dabei für Methyl. Ein solches Amin der Formel (I) ist niedrigviskos und verfügt über einen hohen RCI. Es ist insbesondere erhältlich aus der reduktiven Aminierung von 4,5-Dimethoxyisophthalaldehyd als Dialdehyd der Formel (II) mit Furfurylamin, insbesondere einem Furfurylamin aus biobasierter Quelle, wobei die Hydrierbedingungen so gewählt werden, dass der Furanring dabei weitgehend nicht hydriert wird und hauptsächlich 1,3-Bis(furfurylaminomethyl)-4,5-dimethoxybenzol (Ic) entsteht, oder die Hydrierbedingungen so gewählt werden, dass der Furanring weitgehend ebenfalls hydriert wird, der Benzolring hingegen nicht hydriert wird und hauptsächlich 1,3-Bis(tetrahydrofurfurylaminomethyl)-4,5-dimethoxybenzol (Id) entsteht, oder die Hydrierbedingungen werden so gewählt, dass der Furanring und der Benzolring beide ebenfalls hydriert werden und somit hauptsächlich 1,3-Bis(tetrahydrofurfurylaminomethyl)-4,5-dimethoxycyclohexan (Ie) entsteht.

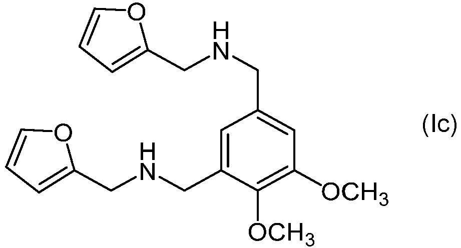

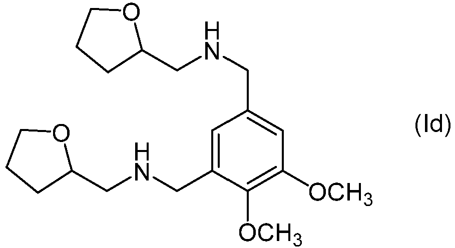

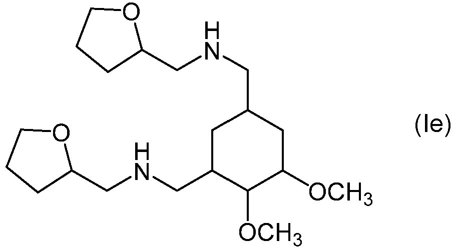

Im Fall des Amins der Formel (Ic) und/oder (Id) enthält das Reaktionsprodukt typischerweise auch die entsprechenden gemischt hydrierten Amine der Formeln

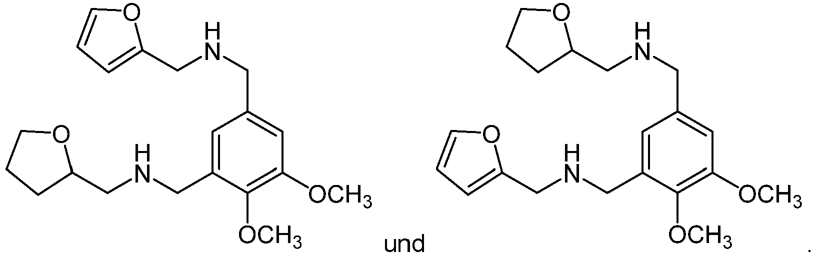

Diese genannten bevorzugten Amine der Formel (I) sind insbesondere Diamine mit primären und/oder sekundären Aminogruppen. Sie sind besonders geeignet als Härter für die genannten aminreaktiven Verbindungen, entweder mit 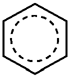 Benzolring oder Cyclohexanring. Dabei ermöglicht der Benzolring typischerweise eine besonders hohe Endhärte, während der Cyclohexanring eine besonders geringe Neigung zum Vergilben ermöglicht.

Die im Folgenden beschriebenen Amine der Formel (I) sind besonders geeignet als Härter für Epoxidharze als aminreaktive Verbindung.

In einer bevorzugten Ausführungsform der Erfindung stehen R¹ für H und 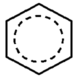 für einen Benzolring. Ein solches Amin der Formel (I) enthält eine Phenolgruppe. Es wird auch als Mannich-Base bezeichnet und ermöglicht eine besonders schnelle Aushärtung von Epoxidharzen.

Es wird bevorzugt hergestellt mittels Umsetzung von Guajacol (2-Methoxyphenol), Formaldehyd und mindestens einem Amin der Formel (III) in einer Mannich-Reaktion.

In einer bevorzugten Ausführungsform der Erfindung stehen R¹ für H, 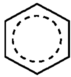 für einen Benzolring und R² und R³ beide für Methyl. Das Amin der Formel (I) steht somit für 2,4-Bis(dimethylaminomethyl)-6-methoxyphenol (If).

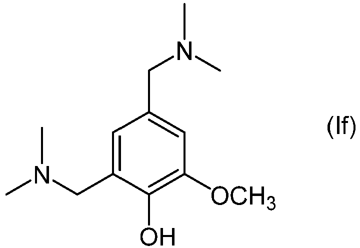

Dieses Amin ist niedrigviskos und besonders geeignet als Cohärter und/oder Beschleuniger für die Aushärtung von Epoxidharzen. Es ermöglicht gut verarbeitbare Epoxidharz-Produkte mit überraschend schneller Aushärtung und geringem Geruch, insbesondere im Vergleich mit dem bekannten petrobasierten Beschleuniger 2,4,6-Tris(dimethylaminomethyl)phenol.

2,4-Bis(dimethylaminomethyl)-6-methoxyphenol (If) wird bevorzugt hergestellt aus der Umsetzung von Guajacol, Formaldehyd und Dimethylamin in einer Mannich-Reaktion.

Ebenfalls möglich ist die Herstellung des Amins der Formel (If) aus der reduktiven Aminierung eines Dialdehyds der Formel (II), bei welchem R¹ für H steht, mit Dimethylamin. Dabei wird die Hydrierung bevorzugt besonders schonend durchgeführt, insbesondere bei Normaldruck und Umsetzung mit beispielsweise Natriumborhydrid, wobei das erhaltene Reaktionsprodukt bevorzugt mittels Destillation gereinigt wird.

Weiterhin bevorzugt ist ein Amin der Formel (I), bei welchem 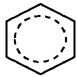 für einen Benzolring, R¹ für H, R² für Furfuryl und R³ für H stehen. Das Amin der Formel (I) steht somit für 2,4-Bis(furfurylaminomethyl)-6-methoxyphenol (Ig).

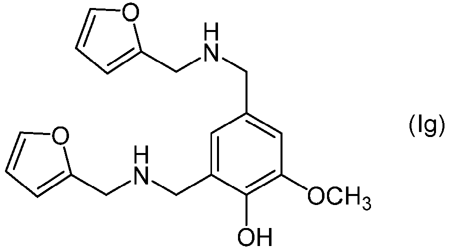

Dieses Amin wird insbesondere erhalten aus der Umsetzung von Guajacol, Furfurylamin und Formaldehyd, oder aus der Umaminierung von 2,4-Bis(dimethylaminomethyl)-6-methoxyphenol (If) mit Furfurylamin unter Freisetzung und Entfernung von Dimethylamin. Das Amin der Formel (Ig) verfügt insbesondere über einen RCI von 1 und ermöglicht Epoxidharz-Produkte, die weitgehend ohne durch Blushing verursachte Störungen der Oberfläche aushärten.

In einer weiteren bevorzugten Ausführungsform der Erfindung stehen R³ für H und R² für einen linearen Aminoalkylrest mit 2 bis 6 C-Atomen, insbesondere 2-Aminoethyl. Ein solches Amin der Formel (I) ermöglicht eine besonders hohe Vernetzungsdichte, besonders hohe Haftkräfte und hohe Glasübergangstemperaturen. Bevorzugt steht R¹ dabei für Methyl.

Besonders bevorzugt stehen R¹ für Methyl, R² für 2-Aminoethyl und R³ für H. Das Amin der Formel (I) steht somit insbesondere für 1,3-Bis(N-(2-aminoethyl)aminomethyl)-4,5-dimethoxybenzol (Ih) oder 1,3-Bis(N-(2-aminoethyl)aminomethyl)-4,5-dimethoxycyclohexan (Ii).

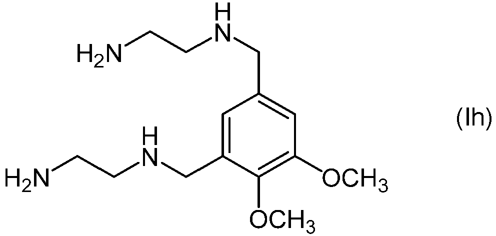

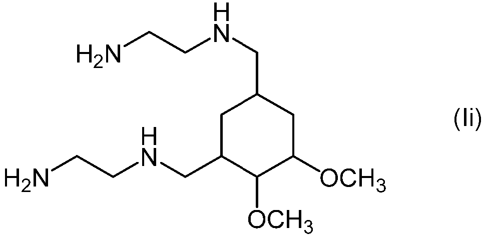

Die Amine der Formeln (Ih) oder (Ii) werden insbesondere erhalten aus der reduktiven Aminierung von 4,5-Dimethoxyisophthalaldehyd als Dialdehyd der Formel (II) mit einem Überschuss 1,2-Ethandiamin als Amin der Formel (III) und nachfolgender Entfernung von nicht umgesetztem 1,2-Ethandiamin. Ein so erhaltenes Reaktionsprodukt enthält typischerweise höhermolekulare Anteile mit doppelt alkyliertem 1,2-Ethandiamin. Falls gewünscht kann es mittels Destillation von solchen Anteilen befreit werden.

Besonders bevorzugt ist ein Amin der Formel (Ih), welches mittels Destillation von höhermolekularen Anteilen befreit wurde.

In einer weiteren bevorzugten Ausführungsform der Erfindung stehen R³ für H und R² für einen N-substituierten Aminoalkylrest mit 2 bis 10 C-Atomen, insbesondere für 2-Benzylaminoethyl, 2-Furfurylaminoethyl oder 3-Dimethylaminopropyl.

Bevorzugt stehen dabei 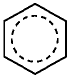 für einen Benzolring und R¹ für H oder Methyl. Besonders bevorzugt sind somit 2,4-Bis((2-furfurylaminoethyl)aminomethyl)-6-methoxyphenol (Ij), 1,3-Bis((2-furfurylaminoethyl)aminomethyl)-4,5-dimethoxybenzol (Ik), 2,4-Bis((2-benzylaminoethyl)aminomethyl)-6-methoxyphenol (Im), 1,3-Bis((2-benzylaminoethyl)aminomethyl)-4,5-dimethoxybenzol (In), 2,4-Bis(3-dimethylaminopropylaminomethyl)-6-methoxyphenol (lo) oder 1,3-Bis(3-dimethylaminopropylaminomethyl)-4,5-dimethoxybenzol (Ip).

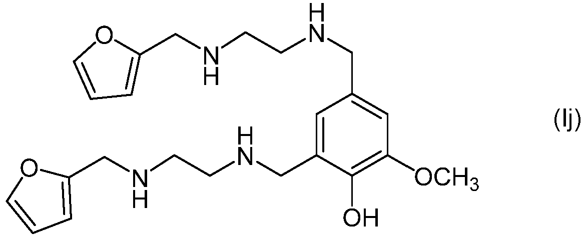

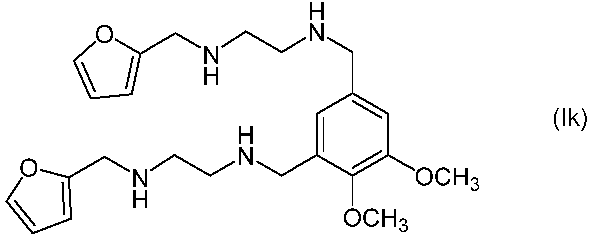

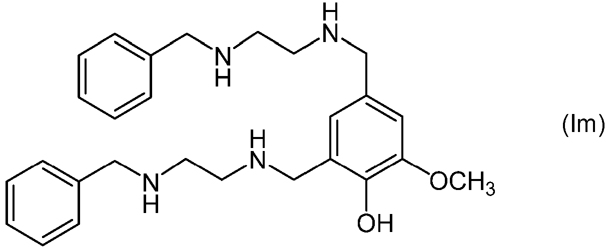

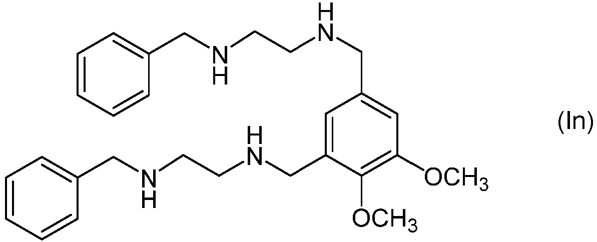

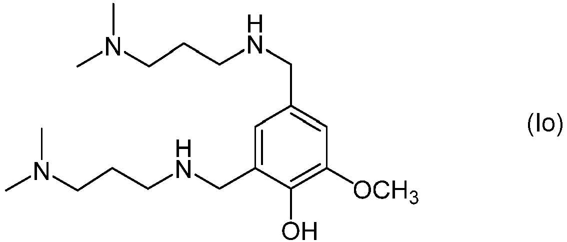

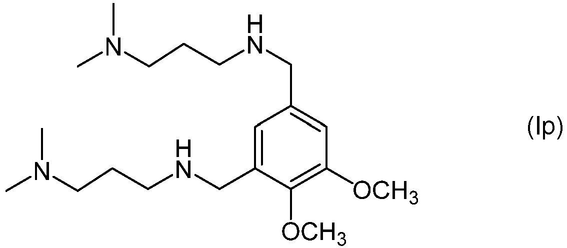

Die Amine der Formeln (Ij), (Im) und (Io) werden insbesondere erhalten aus Umsetzung von Guajacol mit N-Furfuryl-1,2-ethandiamin oder N-Benzyl-1,2-ethandiamin oder 3-Dimethylaminopropylamin als Amin der Formel (III), oder aus der Umaminierung von 2,4-Bis(dimethylaminomethyl)-6-methoxyphenol (If) mit N-Furfuryl-1,2-ethandiamin oder N-Benzyl-1,2-ethandiamin oder 3-Dimethylaminopropylamin und Entfernung von Dimethylamin.

Die Amine der Formeln (Ik), (In) und (Ip) werden insbesondere erhalten aus der reduktiven Aminierung von 4,5-Dimethoxyisophthalaldehyd als Dialdehyd der Formel (II) mit N-Furfuryl-1,2-ethandiamin oder N-Benzyl-1,2-ethandiamin oder 3-Dimethylaminopropylamin als Amin der Formel (III).

In einer bevorzugten Ausführungsform der Erfindung stehen im Amin der Formel (I) die Reste R² an den beiden Stickstoffatomen für jeweils unterschiedliche Reste. Bevorzugt stehen dabei R¹ für Methyl, beide Reste R³ für H, einer der Reste R² für H und der andere Rest R² für Methyl, Ethyl, Propyl, Isopropyl, Butyl, Isobutyl, Cyclohexyl, Benzyl, Furfuryl, Tetrahydrofurfuryl oder 3-Dimethylaminopropyl.

Im Fall von 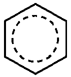 = Benzolring steht das Amin der Formel (I) somit insbesondere für ein Amin der Formel (Iq) oder (Ir), bzw. für ein Amin der Formel (Is) oder (It), bzw. für ein Amin der Formel (Iu) oder (Iv), bzw. für ein Amin der Formel (Iw) oder (Ix), bzw. für ein Amin der Formel (Iy) oder (Iz).

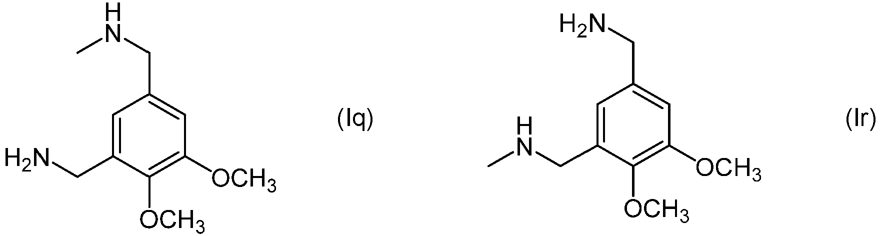

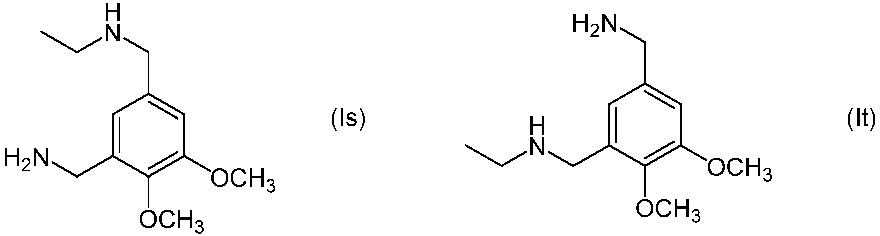

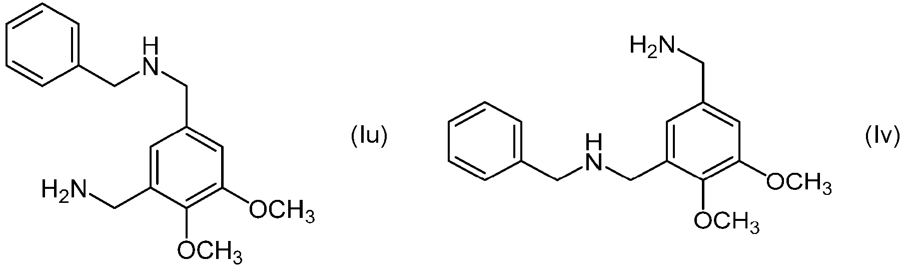

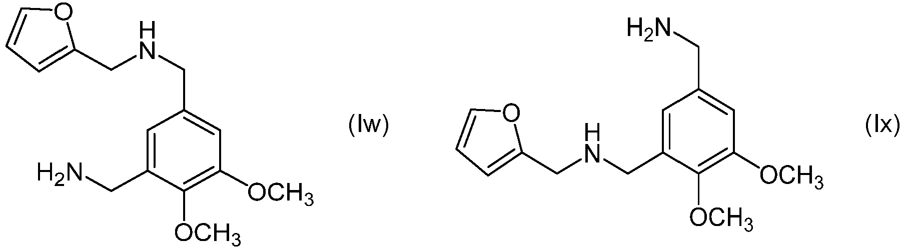

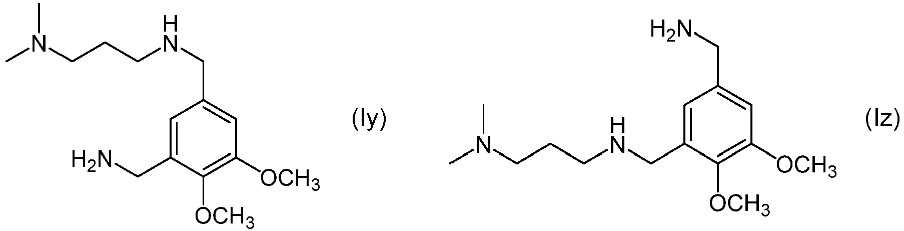

Die Amine der Formeln (Iq) bis (Ix) sind als Härter für alle genannten aminreaktiven Verbindungen geeignet, während die Amine der Formeln (Iy) und (Iz) insbesondere als Härter für Epoxidharze geeignet sind.

Die Amine der Formeln (Iq) bis (Iz) werden insbesondere aus der reduktiven Aminierung von 4,5-Dimethoxyisophthalaldehyd als Dialdehyd der Formel (II) mit Ammoniak oder Hydroxylamin und Methylamin, Ethylamin, Propylamin, Isopropylamin, Butylamin, Isobutylamin, Cyclohexylamin, Benzylamin, Furfurylamin oder 3-Dimethylaminopropylamin als weiterem Amin der Formel (III) erhalten. Solche Amine ermöglichen eine interessante Kombination aus langer Offenzeit bei schneller Durchhärtung und eine geringe Neigung zu Blushing-Effekten bei schneller Aushärtung. Typischerweise sind sie Bestandteil eines Reaktionsprodukts, welches zusätzlich die beiden entsprechenden symmetrisch substituierten Amine der Formel (I) enthält, im Fall vom Amin der Formel (Iw) und (Ix) also 1,3-Bis(aminomethyl)-4,5-dimethoxybenzol (la) und 1,3-Bis(furfurylaminomethyl)-4,5-dimethoxybenzol (Ic), und im Fall vom Amin der Formel (Iy) und (Iz) also 1,3-Bis(aminomethyl)-4,5-dimethoxybenzol (la) und 1,3-Bis(3-dimethylaminopropylaminomethyl)-4,5-dimethoxybenzol (Ip).

Wie bereits erwähnt, können die genannten Amine der Formel (I) auf verschiedenen Wegen hergestellt werden.

Ein Amin der Formel (I), bei welchem R¹ für einen Alkylrest mit 1 bis 6 C-Atomen, insbesondere Methyl, steht, wird bevorzugt aus einem Verfahren erhalten, bei welchem
(i) in einem ersten Schritt Vanillin in Gegenwart von Säure mit Hexamethylentetramin und Wasser zu 5-Formylvanillin umgesetzt wird,
(ii) in einem zweiten Schritt 5-Formylvanillin an der Phenolgruppe zu einem Dialdehyd der Formel (II) alkyliert wird, und
(iii) in einem dritten Schritt der Dialdehyd der Formel (II) mit mindestens einem Amin der Formel (III) oder Hydroxylamin kondensiert und mit Wasserstoff zum Amin der Formel (I) hydriert wird.

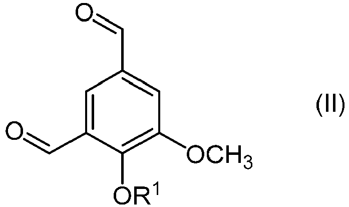

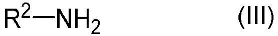

Das im Verfahren eingesetzte Vanillin ist bevorzugt biobasiert und verfügt über einen RCI von 1. Besonders bevorzugt stammt es aus einem Abbauprozess von Lignin. Solche Qualitäten von Vanilllin sind kommerziell erhältlich, beispielsweise als EuroVanillin Supreme, EuroVanillin Regular oder EuroVanillin Aromatic (von Borregaard).

Das Vanillin wird im ersten Schritt des Verfahrens in Gegenwart von Säure mit Hexamethylentetramin und Wasser umgesetzt, wobei an der freien ortho-Position zur Phenolgruppe eine Formylgruppe eingeführt und somit 5-Formylvanillin (4-Hydroxy-5-methoxyisophthalaldehyd) erhalten wird (Duff-Reaktion). Als Säure bevorzugt ist Schwefelsäure, Trifluoressigsäure, Essigsäure oder eine Mischung aus zwei oder mehr dieser Säuren. Hexamethylentetramin (1,3,5,7-Tetraazaadamantan) dient als Quelle für die Formylgruppe. Es wird seinerseits erhalten aus der Umsetzung von Formaldehyd und Ammoniak und ist kostengünstig verfügbar. Bevorzugt wird eine Qualität von Hexamethylentetramin eingesetzt, welche ausgehend von biobasiertem Formaldehyd hergestellt ist. Bevorzugt werden Vanillin und Hexamethylentetramin in einem Molverhältnis von ungefähr 1:1 eingesetzt. Bevorzugt werden Vanillin und Hexamethylentetramin mit der Säure vermischt, gegebenenfalls in Anwesenheit eines geeigneten Lösemittels. Bevorzugt dient die Säure zum Lösen von Vanillin und Hexamethylentetramin, ohne dass ein weiteres organisches Lösemittel vorhanden ist. Das Reaktionsgemisch wird bevorzugt erhitzt, insbesondere auf eine Temperatur im Bereich von 80 bis 150 °C, und nach einer geeigneten Reaktionsdauer, insbesondere nach einigen Stunden, mit Wasser oder einer wässrigen Säure wie insbesondere Salzsäure versetzt und weiter umgesetzt, bevor die Reaktionsmischung abgekühlt und mit einem geeigneten organischen Lösemittel, beispielsweise Dichlormethan, versetzt wird, um das gebildete 5-Formylvanillin in die organische Phase aufzunehmen und von den weiteren Reagenzien abzutrennen. Anschliessend wird das Lösemittel der organischen Phase destillativ entfernt und 5-Formylvanillin (= Dialdehyd der Formel (II) mit R¹ = H) wird als kristalliner Feststoff erhalten. Zur Reinigung kann der erhaltene Feststoff umkristalliert werden, beispielsweise aus Toluol.

Im zweiten Schritt des Verfahrens wird 5-Formylvanillin an der Phenolgruppe mit einer geeigneten Methode alkyliert, um ein Dialdehyd der Formel (II) mit R¹ = Alkylrest mit 1 bis 6 C-Atomen zu erhalten. Falls ein biobasiertes Alkylierungsmittel eingesetzt wird verfügt der erhaltene Dialdehyd insbesondere weiterhin über einen RCI von 1. Geeignete Alkylierungsmittel sind insbesondere Alkylhalogenide, Carbonsäuren oder Ester von Schwefelsäure, Sulfonsäuren, Phosphorsäure oder Phosphonsäuren, bevorzugt Dimethylsulfat, Diethylsulfat oder Ameisensäure. Bevorzugt wird die Phenolgruppe methyliert, insbesondere durch Umsetzung mit Dimethylsulfat oder Ameisensäure. Dabei wird 4,5-Dimethoxyisophthalaldehyd (Dialdehyd der Formel (II) mit R¹ = Methyl) insbesondere als kristalliner Feststoff erhalten.

Im dritten Schritt des Verfahrens wird der Dialdehyd der Formel (II) mit mindestens einem Amin der Formel (III) oder Hydroxylamin kondensiert und mit Wasserstoff zum Amin der Formel (I) hydriert. Diese Umsetzung wird auch als reduktive Aminierung bezeichnet. Dabei entsteht als Zwischenprodukt ein Imin der Formel (IV) oder - im Fall von Hydroxylamin - ein Dioxim der Formel (V), welches falls gewünscht isoliert werden kann, oder bevorzugt nicht isoliert wird und direkt mit Wasserstoff zum Amin der Formel (I) hydriert wird.

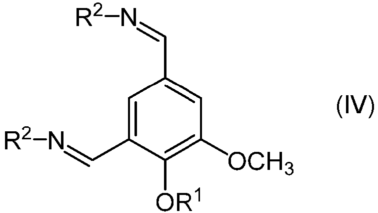

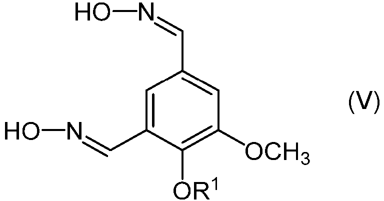

Bevorzugt werden mindestens 2 mol Amin der Formel (III) oder Hydroxylamin pro mol Dialdehyd der Formel (II) eingesetzt.

Die Hydrierung kann direkt mit molekularem Wasserstoff oder indirekt durch Wasserstoff- oder Hydrid-Transfer von anderen Reagenzien, wie beispielsweise Ameisensäure, Lithiumaluminiumhydrid oder Natriumborhydrid, erfolgen. Bevorzugt erfolgt die Hydrierung mit molekularem Wasserstoff.

Bevorzugt wird die Hydrierung in Anwesenheit eines geeigneten Katalysators durchgeführt. Als Katalysator bevorzugt sind Palladium auf Kohle (Pd/C), Platin auf Kohle (Pt/C), Adams-Katalysator oder Raney-Nickel, insbesondere Palladium auf Kohle oder Raney-Nickel.

Bei Verwendung von molekularem Wasserstoff wird für die Hydrierung bevorzugt in einer Druckapparatur bei einem Wasserstoff-Druck von 5 bis 300 bar gearbeitet. Dies kann in einem Batch-Prozess oder bevorzugt in einem kontinuierlichen Prozess erfolgen.

Die Hydrierung wird bevorzugt bei einer Temperatur im Bereich von 40 bis 150 °C durchgeführt.

Die Hydrierbedingungen können so gewählt werden, dass der aromatische Ring dabei nicht hydriert wird, wobei ein Amin der Formel (I) mit 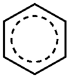 = Benzolring entsteht. Die Hydrierbedingungen können aber auch so gewählt werden, dass der aromatische Ring dabei ebenfalls hydriert wird, wobei ein Amin der Formel (I) mit 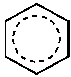 = Cyclohexanring entsteht.

Soll der aromatische Ring bei der Hydrierung nicht hydriert werden, wird bevorzugt bei einer Temperatur im Bereich von 60 bis 120 °C und einem Wasserstoffdruck im Bereich von 10 bis 120 bar gearbeitet. Andernfalls wird bevorzugt bei einer Temperatur im Bereich von 80 bis 150 °C und einem Wasserstoffdruck im Bereich von 150 bis 250 bar gearbeitet.

Bevorzugt werden die flüchtigen Anteile, insbesondere freigesetztes Wasser und ein gegebenenfalls vorhandenes Lösemittel, nach der Hydrierung aus dem Reaktionsprodukt entfernt, insbesondere mittels Destillation oder Stripping.

Als Amin der Formel (III) geeignet sind insbesondere die bereits genannten, insbesondere Ammoniak, Methylamin, Ethylamin, Propylamin, Isopropylamin, Butylamin, Isobutylamin, Cyclohexylamin, Benzylamin, Furfurylamin, 1,2-Ethandiamin, 1,3-Propandiamin, 1,4-Butandiamin, 1,5-Pentandiamin, 1,6-Hexandiamin, N-Benzyl-1,2-ethandiamin, N-Furfuryl-1,2-ethandiamin oder 3-Dimethylaminopropylamin.

Im Fall von Ammoniak als Amin der Formel (III) werden bevorzugt deutlich mehr als 2 mol Ammoniak pro mol Dialdehyd der Formel (II) in einer Druckapparatur bei einem Wasserstoff-Druck von 5 bis 300 bar zum Amin der Formel (I) mit R² und R³ = H umgesetzt.

Für eine Laborsynthese wird bevorzugt Hydroxylamin anstelle von Ammoniak eingesetzt, insbesondere ungefähr 2 mol Hydroxylamin pro mol Dialdehyd der Formel (II).

Im Fall eines Amins mit einer primären Aminogruppe und keinen weiteren Aminwasserstoffen als Amin der Formel (III), wie Methylamin, Ethylamin, Propylamin, Isopropylamin, Butylamin, Isobutylamin, Cyclohexylamin, Benzylamin, Furfurylamin oder 3-Dimethylaminopropylamin, werden bevorzugt ungefähr 2 mol des Amins der Formel (III) pro mol Dialdehyd der Formel (II) eingesetzt.

Im Fall eines primären Diamins als Amin der Formel (III), wie 1,2-Ethandiamin, 1,3-Propandiamin, 1,4-Butandiamin, 1,5-Pentandiamin oder 1,6-Hexandiamin werden bevorzugt mehr als 2 mol Amin der Formel (III) pro mol Dialdehyd der Formel (II) eingesetzt. Bevorzugt werden mindestens 4 mol, insbesondere 6 bis 20 mol, eines Amins der Formel (III) mit R² = Aminoalkylrest und R³ = H pro mol Dialdehyd der Formel (II) eingesetzt und der Überschuss an Amin der Formel (III) wird bevorzugt entfernt, insbesondere nach der Hydrierung zusammen mit dem freigesetzten Wasser und einem gegebenenfalls vorhandenen Lösemittel, insbesondere mittels Destillation oder Stripping.

Im Fall eines Diamins mit einer primären und einer sekundären Aminogruppe als Amin der Formel (III), wie N-Benzyl-1,2-ethandiamin oder N-Furfuryl-1,2-ethandiamin, werden bevorzugt ungefähr 2 mol des Amins der Formel (III) pro mol Dialdehyd der Formel (II) eingesetzt. Es ist aber auch möglich, mehr als 2 mol eines solchen Amins der Formel (III) einzusetzen, insbesondere 2.5 bis 10 mol. Dabei wird das überschüssige Amin der Formel (III) bevorzugt nicht aus dem Reaktionsprodukt entfernt, und das erhaltene Amin der Formel (I) wird somit zusammen mit dem nicht umgesetzten Amin der Formel (III) als Härter eingesetzt.

Ein Amin der Formel (I), bei welchem R¹ für H und 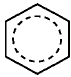 für einen Benzolring stehen, wird bevorzugt mittels einer Mannich-Reaktion hergestellt, wobei Guajacol (2-Methoxyphenol) mit Formaldehyd und mindestens einem Amin der Formel (III) unter Freisetzung von Wasser umgesetzt werden.

Bevorzugt werden Guajacol und das Amin der Formel (III) vorgelegt und der Formaldehyd, gegebenenfalls in Form von 1,3,5-Trioxan oder Paraformaldehyd, langsam zugegeben, wobei die Temperatur der Reaktionsmischung bevorzugt im Bereich von etwa 50 bis 150 °C gehalten wird. Anschliessend werden das freigesetzte Wasser und ein gegebenenfalls vorhandenens Lösemittel abdestilliert. Bevorzugt werden 2 bis 20 mol, insbesondere 2 bis 10 mol, Amin der Formel (III) und 2 bis 3 mol, bevorzugt ungefähr 2 mol, Formaldehyd pro mol Guajacol eingesetzt. Nicht umgesetztes Amin der Formel (III) wird gegebenenfalls zusammen mit dem freigesetzten Wasser destillativ entfernt.

Bevorzugt wird Formaldehyd aus einer biobasierten Quelle eingesetzt.

Bevorzugt wird Guajacol aus einer biobasierten Quelle eingesetzt.

Als Amin der Formel (III) geeignet sind die bereits genannten, insbesondere Dimethylamin, Furfurylamin, 3-Dimethylaminopropylamin, N-Benzyl-1,2-ethandiamin oder N-Furfuryl-1,2-ethandiamin.

Besonders geeignet ist Dimethylamin. Damit wird das besonders bevorzugte 2,4-Bis(dimethylaminomethyl)-6-methoxyphenol (If) in hoher Reinheit erhalten.

Ausgehend von 2,4-Bis(dimethylaminomethyl)-6-methoxyphenol (If) können weitere Amine der Formel (I), bei welchen R¹ für H und 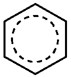 für einen Benzolring stehen, durch Umaminierung erhalten werden, wie bereits erwähnt. Für eine Umaminierung wird 2,4-Bis(dimethylaminomethyl)-6-methoxyphenol (If) mit dem jeweiligen Amin der Formel (III) versetzt und bei einer Temperatur im Bereich von 80 bis 160 °C unter destillativer Entfernung von Dimethylamin erhitzt. Dabei werden Dimethylamino-Reste durch den Rest des eingesetzten Amins der Formel (III) ersetzt. Im Fall von 3-Dimethylaminopropylamin als Amin der Formel (III) entsteht bei einer vollständigen Umaminierung 2,4-Bis(3-dimethylaminopropylaminomethyl)-6-methoxyphenol (Io).

Bevorzugt werden 1 bis 10 mol Amin der Formel (III) pro mol 2,4-Bis(dimethylaminomethyl)-6-methoxyphenol (If) eingesetzt. Besonders bevorzugt werden 2 bis 10 mol, insbesondere 2 bis 5 mol, Amin der Formel (III) pro mol 2,4-Bis(dimethylaminomethyl)-6-methoxyphenol (If) eingesetzt. Für den Fall, dass mehr als 2 mol Amin der Formel (III) für die Umaminierung eingesetzt werden, enthält das Reaktionsprodukt typischerweise nicht umgesetztes Amin der Formel (III). Ein solches Reaktionsprodukt ist besonders niedrigviskos und kann als solches für die Aushärtung von Epoxidharzen verwendet werden. Es kann aber auch gereinigt werden, indem nicht umgesetztes Amin der Formel (III) destillativ entfernt wird.

Das Amin der Formel (I) wird verwendet als Bestandteil eines Härters zum Vernetzen von aminreaktiven Verbindungen.

Zum Vernetzen von Polyisocyanaten, Poly(meth)acrylaten, Polycarbonsäuren oder Carbonsäureanhydriden bevorzugt sind Amine der Formel (I), bei welchen R³ jeweils für H steht und welche somit primäre und/oder sekundäre Aminogruppen enthalten.

Im Fall von Polyisocyanaten als aminreaktive Verbindung entstehen bei der Vernetzung mit solchen Aminen der Formel (I) Harnstoffgruppen und die Produkte können als Polyharnstoffe oder Polyurethane bezeichnet werden.

Das Amin der Formel (I) kann beispielsweise verwendet werden als Bestandteil eines Härters zum Vernetzen von Polyisocyanaten, wobei der Härter zusätzlich mindestens ein Polyol enthält. Das Amin der Formel (I) kann dabei in einem stark unterstöchiometrischen Verhältnis in Bezug auf die Isocyanatgruppen eingesetzt werden, wobei das Amin der Formel (I) beim Vermischen des Härters mit dem Polyisocyanat aufgrund der sehr schnellen Vernetzungsreaktion unmittelbar eine Verdickung bewirkt, wodurch die vermischte Zusammensetzung sehr schnell über eine hohe Standfestigkeit verfügt, was für gewisse Applikationen vorteilhaft ist. Dafür geeignet sind insbesondere 1,3-Bis(aminomethyl)-4,5-dimethoxybenzol (la) oder 1,3-Bis(aminomethyl)-4,5-dimethoxycyclohexan (Ib).

Im Fall von Poly(meth)acrylaten als aminreaktive Verbindung addieren primäre und/oder sekundäre Aminogruppen solcher Amine der Formel (I) unter Vernetzung an die aktivierten Doppelbindungen.

Im Fall von Polycarbonsäuren oder Carbonsäureanhydriden als aminreaktive Verbindung entstehen bei der Vernetzung mit Aminen der Formel (I) mit primären und/oder sekundären Aminogruppen Polyamide.

Besonders bevorzugt wird das Amin der Formel (I) verwendet als Bestandteil eines Härters zum Vernetzen von Epoxidharzen.

Im Folgenden wird ein Härter beschrieben, welcher besonders geeignet ist zum Vernetzen von Epoxidharzen.

Der Härter kann insbesondere mehr als ein Amin der Formel (I) enthalten.

Im Fall von 2,4-Bis(dimethylaminomethyl)-6-methoxyphenol (If) als Amin der Formel (I) enthält der Härter bevorzugt mindestens ein weiteres Amin, welches ein weiteres Amin der Formel (I) oder ein weiteres Amin, welches nicht der Formel (I) entspricht, darstellen kann.

Ein Amin der Formel (I), bei welchem R³ für H steht, kann in Form eines aminfunktionellen Addukts mit mindestens einem Epoxidharz eingesetzt werden. Bevorzugt sind Addukte mit einem Monoepoxid, insbesondere in einem Verhältnis von 1 bis 10 mol, bevorzugt 1 bis 5 mol, Amin der Formel (I) pro mol Monoepoxid. Besonders bevorzugt sind Addukte mit einem Polyepoxid, insbesondere einem Diepoxid, insbesondere in einem Verhältnis von 1.4 bis 10 mol, bevorzugt 1.5 bis 5 mol, Amin der Formel (I) pro Molequivalent Epoxidgruppen des Polyepoxids.

Geeignet als Monoepoxid ist insbesondere Phenylglycidylether, Kresylglycidylether oder tert.Butylphenylglycidylether. Geeignet als Polyepoxid ist insbesondere Bisphenol A-Diglycidylether, Bisphenol F-Diglycidylether, Polyoxypropylenglykol-Diglycidlyether, Polyoxyethylenglykol-Diglycidylether oder Phenol-Formaldehyd Novolak-Glycidylether, insbesondere Bisphenol A-Diglycidylether.

Der Härter enthält bevorzugt mindestens einen weiteren Bestandteil ausgewählt aus weiteren Aminen, welche nicht der Formel (I) entsprechen, Beschleunigern und Verdünnern, insbesondere mindestens ein weiteres Amin, welches nicht der Formel (I) entspricht.

Bevorzugt enthält der Härter mindestens ein weiteres Amin, welches nicht der Formel (I) entspricht und welches kein Nebenprodukt aus der Herstellung des Amins der Formel (I) ist.

Als weiteres Amin, welches nicht der Formel (I) entspricht, bevorzugt sind Amine mit aliphatischen Aminogruppen und mindestens drei Aminwasserstoffen, insbesondere N-Benzyl-1,2-ethandiamin, N-Benzyl-1,2-propandiamin, N-Benzyl-1,3-bis(aminomethyl)benzol, N-(2-Ethylhexyl)-1,3-bis(aminomethyl)benzol, 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethyl-1,6-hexandiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)-methan, Bis(4-amino-3-ethyl-5-methylcyclohexyl)methan, 1-Amino-3-aminomethyl-3,5,5-trimethylcyclohexan (IPDA), 2(4)-Methyl-1,3-diaminocyclohexan, 2,5(2,6)-Bis(aminomethyl)bicyclo[2.2.1]heptan (NBDA), 3(4),8(9)-Bis(aminomethyl)tricyclo-[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA), 1,4-Bis(aminomethyl)benzol, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)-polytetrahydrofurane oder andere Polytetrahydrofurandiamine, Polyoxyalkylendi- oder -triamine, insbesondere Polyoxypropylendiamine oder Polyoxypropylentriamine wie Jeffamine^{®} D-230, Jeffamine^{®} D-400 oder Jeffamine^{®} T-403 (alle von Huntsman), Furan-basierte Amine wie N-Furfuryl-1,2-ethandiamin, 2,5-Bis(aminomethyl)furan, 2,5-Bis(aminomethyl)tetrahydrofuran, Bis(5-aminomethylfuran-2-yl)methan, Bis(5-aminomethyltetrahydrofuran-2-yl)methan, 2,2-Bis(5-aminomethylfuran-2-yl)propan oder 2,2-Bis(5-aminomethyltetrahydrofuran-2-yl)propan, oder Diethylentriamin (DETA), Triethylentetramin (TETA), Tetraethylenpentamin (TEPA), Pentaethylenhexamin (PEHA), Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin, 3-(2-Aminoethyl)aminopropylamin, Bis(hexamethylen)triamin (BHMT), N-Aminoethylpiperazin, 3-Dimethylaminopropylamin (DMAPA), 3-(3-(Dimethylamino)propylamino)propylamin (DMAPAPA), aminfunktionelle Addukte der genannten Amine mit Epoxiden, Phenalkamine, welche Umsetzungsprodukte von Cardanol mit Aldehyden, insbesondere Formaldehyd, und Polyaminen darstellen, oder eine Mischung aus zwei oder mehr dieser Amine.

Bevorzugt enthält der Härter mindestens ein Amin ausgewählt aus der Gruppe bestehend aus N-Benzyl-1,2-ethandiamin, N,N'-Dibenzyl-1,2-ethandiamin, MPMD, TMD, 1,2-Diaminocyclohexan, 1,3-Bis(aminomethyl)cyclohexan, 1,4-Bis(aminomethyl)cyclohexan, Bis(4-aminocyclohexyl)methan, IPDA, 2(4)-Methyl-1,3-diaminocyclohexan, MXDA, DETA, TETA, TEPA, N3-Amin, N4-Amin, DPTA, BHMT, Polyoxypropylendiaminen mit einem mittlerem Molekulargewicht Mₙ im Bereich von 200 bis 500 g/mol, Polyoxypropylentriaminen mit einem mittlerem Molekulargewicht Mₙ im Bereich von 300 bis 500 g/mol, N-Furfuryl-1,2-ethandiamin, 2,5-Bis(aminomethyl)furan, 2,5-Bis(aminomethyl)tetrahydrofuran, Bis(5-aminomethylfuran-2-yl)methan, Bis(5-aminomethyltetrahydrofuran-2-yl)methan, 2,2-Bis(5-aminomethylfuran-2-yl)propan, 2,2-Bis(5-aminomethyltetrahydrofuran-2-yl)propan und Phenalkaminen.

Davon bevorzugt ist IPDA. Damit werden besonders hohe Glasübergangstemperaturen erreicht, was eine besonders gute Robustheit gegenüber hohen Gebrauchstemperaturen ermöglicht. Besonders bevorzugt wird IPDA mit einem hohen RCI aus biobasiertem Aceton eingesetzt, was besonders nachhaltige Härter ermöglicht.

Davon weiterhin bevorzugt ist N-Benzyl-1,2-ethandiamin. Ein solcher Härter ermöglicht besonders niedrigviskose Epoxidharz-Produkte mit besonders schönen Oberflächen.

Davon weiterhin bevorzugt ist N-Furfuryl-1,2-ethandiamin. Ein solcher Härter ist besonders nachhaltig und ermöglicht besonders niedrigviskose Epoxidharz-Produkte mit besonders schönen Oberflächen.

Davon weiterhin bevorzugt ist 2,5-Bis(aminomethyl)furan, 2,5-Bis(aminomethyl)-tetrahydrofuran, Bis(5-aminomethylfuran-2-yl)methan, Bis(5-aminomethyltetrahydrofuran-2-yl)methan, 2,2-Bis(5-aminomethylfuran-2-yl)propan oder 2,2-Bis(5-aminomethyltetrahydrofuran-2-yl)propan, insbesondere 2,5-Bis(aminomethyl)-furan. Solche Härter sind besonders nachhaltig.

Der Härter kann insbesondere mehr als ein weiteres Amin, welches nicht der Formel (I) entspricht, enthalten.

Geeignete Beschleuniger sind insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; Nitrate wie insbesondere Calciumnitrat; tertiäre Amine wie insbesondere 1,4-Diazabicyclo[2.2.2]octan, Benzyldimethylamin, α-Methylbenzyldimethylamin, Triethanolamin, Dimethylaminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo[5.4.0]-undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen.

Bevorzugt sind Säuren, Nitrate, tertiäre Amine oder Mannich-Basen, insbesondere Salicylsäure, Calciumnitrat oder 2,4,6-Tris(dimethylaminomethyl)phenol, oder eine Kombination dieser Beschleuniger.

Ein Härter, welcher ein Amin der Formel (If) enthält, ist bevorzugt frei von 2,4,6-Tris(dimethylaminomethyl)phenol.

Geeignete Verdünner sind insbesondere n-Propanol, Isopropanol, n-Butanol, Isobutanol, tert. Butanol, 1-Pentanol, 2-Pentanol, 3-Pentanol, 2-Methyl-1-butanol, 3-Methyl-1-butanol, 3-Methyl-2-butanol n-Hexanol, 2-Ethylhexanol, Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, 2,2,4-Trimethyl-1,3-pentandiolmonoisobutyrat, Diphenylmethan, Diisopropylnaphthalin, Erdölfraktionen wie zum Beispiel Solvesso^{®}-Typen (von Exxon), Alkylphenole wie tert. Butylphenol, Nonylphenol, Dodecylphenol, Cardanol, styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Davon bevorzugt sind Verdünner mit einem Siedepunkt von mehr als 200 °C, insbesondere Benzylalkohol, styrolisiertem Phenol, ethoxyliertes Phenol, phenolgruppenhaltige aromatische Kohlenwasserstoffharze wie insbesondere die Novares^{®}-Typen LS 500, LX 200, LA 300 oder LA 700 (von Rütgers), Diisopropylnaphthalin oder Cardanol, insbesondere Benzylalkohol. Phenolgruppen-haltige Verdünner zeigen auch eine Wirkung als Beschleuniger. Davon bevorzugt sind weiterhin aromatische Verdünner mit einer besonders hohen verdünnenden Wirkung, insbesondere Xylol.

Davon besonders bevorzugt sind Verdünner mit einem RCI von 1, insbesondere Cardanol. Diese ermöglichen einen besonders nachhaltigen Härter.

Bevorzugt enthält der Härter nur einen geringen Gehalt an Verdünnern, insbesondere 0 bis 50 Gewichts-%, bevorzugt 0 bis 30 Gewichts-%, Verdünner bezogen auf den gesamten Härter.

Der Härter enthält bevorzugt 1 bis 99 Gewichts-%, mehr bevorzugt 2 bis 90 Gewichts-%, mehr bevorzugt 2 bis 80 Gewichts-%, besonders bevorzugt 2 bis 70 Gewichts-%, Amine der Formel (I) bezogen auf den gesamten Härter.

Ein Härter mit Amin der Formel (If) enthät bevorzugt 1 bis 80 Gewichts-%, besonders bevorzugt 2 bis 50 Gewichts-%, insbesondere 2 bis 20 Gewichts-%, Amin der Formel (If) bezogen auf den gesamten Härter.

Ein Härter mit Aminen der Formel (I), bei welchen R¹ für Methyl und R³ für H steht, enthält bevorzugt 5 bis 90 Gewichts-%, insbesondere 10 bis 70 Gewichts-%, Amine der Formel (I) bezogen auf den gesamten Härter.

Der Härter kann wasserbasiert sein und Wasser im Bereich von 15 bis 90 Gewichts-%, bevorzugt 20 bis 80 Gewichts-%, enthalten.

Der Härter ist bevorzugt nicht wasserbasiert. Er enthält bevorzugt weniger als 15 Gewichts-%, insbesondere weniger als 10 Gewichts-%, Wasser, bezogen auf den gesamten Härter. Ein solcher Härter ist besonders geeignet für nicht-wässrige Epoxidharz-Produkte.

Der Härter kann weitere Bestandteile enthalten, insbesondere:
- weitere Addukte, insbesondere Addukte von MPMD oder 1,2-Ethandiamin oder 1,2-Propandiamin mit Kresylglycidylether oder aromatischen Epoxidharzen, bei welchen nicht umgesetztes MPMD, 1,2-Ethandiamin oder 1,2-Propandiamin nach der Umsetzung destillativ entfernt wurde,
- Monoamine wie insbesondere Benzylamin oder Furfurylamin,
- Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten Polyamin, insbesondere DETA oder TETA,
- Mannich-Basen,
- aromatische Polyamine wie insbesondere 4,4'-, 2,4' und/oder 2,2'-Diaminodiphenylmethan, 2,4(6)-Toluoldiamin, 3,5-Dimethylthio-2,4(6)-toluoldiamin oder 3,5-Diethyl-2,4(6)-toluylendiamin,
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol,
- oberflächenaktive Additive, insbesondere Entschäumer, Entlüfter, Netzmittel, Dispergiermittel oder Verlaufsmittel, oder
- Stabilisatoren, insbesondere Stabilisatoren gegen Oxidation, Wärme, Licht oder UV-Strahlung.

Ein weiterer Gegenstand der Erfindung ist eine Epoxidharz-Zusammensetzung umfassend
- eine Harz-Komponente umfassend mindestens ein Epoxidharz und
- eine Härter-Komponente umfassend den Härter enthaltend mindestens ein Amin der Formel (I), wie vorgängig beschrieben.

Als Epoxidharz geeignet sind die bereits genannten, insbesondere Bisphenol A-Diglycidylether und/oder Bisphenol F-Diglycidylether, Phenol-Formaldehyd Novolak-Glycidylether, oder insbesondere Epoxidharze mit einem hohen RCI wie Bisphenol A-Diglycidylether aus der Umsetzung von Bisphenol A mit biobasiertem Epichlorhydrin oder insbesondere Vanillinalkohol-Diglycidylether oder die Glycidylether von Glycerol oder Polyglycerol.

Die Harz-Komponente kann einen Reaktivverdünner enthalten.

Als Reaktivverdünner bevorzugt sind Epoxidgruppen-haltige Reaktivverdünner, insbesondere Butandioldiglycidylether, Hexandioldiglycidylether, Trimethylolpropandi- oder triglycidylether, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃-bis C₁₅-Alkylglycidylether.

Bevorzugt enthält die Epoxidharz-Zusammensetzung mindestens einen weiteren Bestandteil ausgewählt aus der Gruppe bestehend aus Verdünnern, Beschleunigern, Füllstoffen, Pigmenten und oberflächenaktiven Additiven.

Als Verdünnern oder Beschleuniger geeignet sind insbesondere die bereits genannten.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsiebe, Aluminiumoxid, Zinkoxid, Aluminium-dotiertes Zinkoxid, Aluminiumhydroxid, Magnesiumhydroxid, Kieselsäure, Zement, Gips, Flugasche, Russ, Graphit, Metall-Pulver wie Aluminium, Kupfer, Eisen, Zink, Silber oder Stahl, PVC-Pulver oder Hohlkugeln, sowie biobasierte Füllstoffe wie Ligninpulver oder zu Pulver vermahlene Nussschalen oder Obststeine. Davon bevorzugt sind Calciumcarbonat, Baryt, Quarzmehl, Talk, Aluminiumpulver, biobasierte Füllstoffe oder eine Kombination davon.

Geeignete Pigmente sind insbesondere Titandioxide, Eisenoxide, Chrom(III)oxide, organische Pigmente, Russ oder Korrosionsschutzpigmente, insbesondere Phosphate, Orthophosphate oder Polyphosphate, welche als Gegenion insbesondere Chrom, Zink, Aluminium, Kalzium, Strontium oder eine Kombination dieser Metalle enthalten. Besonders geeignet sind Titandioxide.

Geeignete oberflächenaktive Additive sind insbesondere Entschäumer, Entlüfter, Netzmittel, Dispergiermittel, Verlaufsmittel und/oder dispergierte Paraffinwachse.

Gegebenenfalls enthält die Epoxidharz-Zusammensetzung weitere Hilfs- und Zusatzstoffe, insbesondere die Folgenden:
- Reaktivverdünner, insbesondere die bereits vorgängig erwähnten, oder epoxidiertes Sojaöl oder Leinöl, Acetoacetatgruppen aufweisende Verbindungen, insbesondere acetoacetylierte Polyole, Butyrolakton, Carbonate, Aldehyde, Isocyanate oder Reaktivgruppen aufweisende Silikone;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine;
- Fasern, insbesondere Glasfasern, Kohlefasern, Metallfasern, Keramikfasern, Hanffasern, Zellulosefasern oder Kunststofffasern wie Polyamidfasern oder Polyethylenfasern;
- Nanofüllstoffe, insbesondere Carbon Nanotubes;
- Rheologie-Modifizierer, insbesondere Verdicker oder Antiabsetzmittel;
- Haftverbesserer, insbesondere Organoalkoxysilane;
- flammhemmende Substanzen, insbesondere die bereits genannten Füllstoffe Aluminiumhydroxid oder Magnesiumhydroxid, Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)-phosphat, Tris(dichloroisopropyl)phosphat, Tris[3-bromo-2,2-bis(bromomethyl)-propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine; oder
- Stabilisatoren gegen Oxidation, Wärme, Licht oder UV-Strahlung oder Biozide.

Bevorzugt enthält die Epoxidharz-Zusammensetzung nur einen geringen Gehalt an Verdünnern. Bevorzugt enthält sie weniger als 20 Gewichts-%, besonders bevorzugt weniger als 10 Gewichts-%, insbesondere weniger als 5 Gewichts-%, , am meisten bevorzugt weniger als 1 Gewichts-%, Verdünner.

Die Epoxidharz-Zusammensetzung kann Wasser enthalten.

In einer Ausführungsform ist die Epoxidharz-Zusammensetzung wasserbasiert. Dabei ist das Epoxidharz bevorzugt in einer Menge von 50 bis 85 Gewichts-% in Wasser emulgiert und die Härter-Komponente enthält bevorzugt 20 bis 80 Gewichts-% Wasser.

Bevorzugt enthält die Epoxidharz-Zusammensetzung aber nur einen geringen Gehalt an Wasser, bevorzugt weniger als 5 Gewichts-%, insbesondere weniger als 1 Gewichts-%, Wasser. Eine solche, nicht-wasserbasierte Epoxidharz-Zusammensetzung ist besonder vielseitig verwendbar und besonders wasserbeständig.

Bevorzugt ist eine Epoxidharz-Zusammensetzung umfassend
- eine Harz-Komponente enthaltend mindestens ein Epoxidharz und gegebenenfalls weitere Bestandteile wie insbesondere Epoxidgruppen-haltige Reaktivverdünner, Verdünner, Füllstoffe, Pigmente und/oder oberflächenaktive Additive, und
- eine Härter-Komponente enthaltend mindestens ein Amin der Formel (I) und gegebenenfalls weitere Bestandteile wie insbesondere weitere Amine, Beschleuniger und/oder Verdünner.

Die Harz- und die Härter-Komponente der Epoxidharz-Zusammensetzung werden in voneinander getrennten Gebinden gelagert.

Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die Harz- und die Härter-Komponente werden kurz vor oder während der Applikation vermischt. Das Mischungsverhältnis wird bevorzugt so gewählt, dass das molare Verhältnis der gegenüber Epoxidgruppen reaktiven Gruppen zu den Epoxidgruppen im Bereich von 0.5 bis 1.5, insbesondere 0.7 bis 1.2, liegt. In Gewichtsteilen liegt das Mischungsverhältnis zwischen der Harz- und der Härter-Komponente typischerweise im Bereich von 1:2 bis 20:1.

Das Mischen der Komponenten erfolgt kontinuierlich oder batchweise mittels eines geeigneten Verfahrens, wobei darauf zu achten ist, dass zwischen dem Mischen der Komponenten und der Applikation nicht zu viel Zeit vergeht und die Applikation innerhalb der Topfzeit erfolgt. Das Mischen und die Applikation können bei Umgebungstemperatur erfolgen, welche typischerweise im Bereich von etwa 5 bis 40°C, bevorzugt bei etwa 10 bis 35°C, liegt, oder bei erhöhter Temperatur, insbesondere im Bereich von 40 bis 150 °C, bevorzugt 50 bis 120 °C.

Mit dem Mischen der Komponenten beginnt die Aushärtung der Epoxidharz-Zusammensetzung durch chemische Reaktion. Primäre und sekundäre Aminogruppen und gegebenenfalls vorhandene weitere gegenüber Epoxidgruppen reaktive Gruppen reagieren mit den Epoxidgruppen unter deren Ringöffnung. Weiterhin katalysiert ein Phenolgruppen-haltiges Amin der Formel (I) die Homopolymerisation der Epoxidgruppen. Als Ergebnis hauptsächlich dieser Reaktionen polymerisiert die Zusammensetzung und härtet dadurch aus.

Die Aushärtung erstreckt sich typischerweise über einige Stunden bis Tage. Die Dauer hängt unter anderem von der Temperatur, der Reaktivität der Bestandteile, deren Stöchiometrie und der Gegenwart bzw. Menge von Beschleunigern ab.

Im frisch vermischten Zustand hat die Epoxidharz-Zusammensetzung bevorzugt eine niedrige Viskosität. Bevorzugt liegt die Viskosität 5 Minuten nach dem Mischen der Harz- und der Härter-Komponente bei 20 °C im Bereich von 0.1 bis 50 Pa·s, bevorzugt 0.2 bis 20 Pa·s, besonders bevorzugt 0.3 bis 10 Pa·s, gemessen mittels Kegel-Platten Viskosimeter bei einer Schergeschwindigkeit von 10 s⁻¹.

Die Applikation der Epoxidharz-Zusammensetzung erfolgt auf mindestens ein Substrat und/oder in mindestens eine Giessform.

Als Substrat geeignet sind insbesondere:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke, insbesondere beschichtete Böden, welche mit einer weiteren Bodenbelagsschicht überschichtet werden.

Die Substrate können bei Bedarf vor dem Applizieren vorbehandelt werden, insbesondere durch physikalische und/oder chemische Reinigungsverfahren oder das Aufbringen eines Aktivators oder eines Primers.

Die Substrate werden insbesondere beschichtet und/oder verklebt.

Als Giessform geeignet ist eine Vorrichtung, in welche die vermischte, flüssige Epoxidharz-Zusammensetzung gegossen und darin ausgehärtet werden und nach der Aushärtung daraus entformt bzw. entnommen werden kann, wobei die ausgehärtete Zusammensetzung einen Formkörper bildet.

Die Giessform besteht bevorzugt zumindest auf der Oberfläche aus einem Material, von welchem die ausgehärtete Epoxidharz-Zusammensetzung ohne Beschädigung wieder gelöst werden kann, insbesondere aus Metall, Keramik, Kunststoff oder Silikon, welche gegebenenfalls mit einer Antihaft-Beschichtung versehen sind, insbesondere aus Teflon, Silikon oder einem Wachs.

Ein weiterer Gegenstand der Erfindung ist eine ausgehärtete Zusammensetzung erhalten aus der beschriebenen Epoxidharz-Zusammensetzung nach dem Vermischen der Harz- und der Härter-Komponente.

Die Epoxidharz-Zusammensetzung wird bevorzugt verwendet als Beschichtung, Primer, Klebstoff, Dichtstoff, Vergussmasse, Giessharz, Imprägnierharz, oder als Formkörper oder Matrix für Verbundwerkstoffe (Composites) wie insbesondere CFK (enthaltend Carbonfasern), GFK (enthaltend Glasfasern), NFK (enthaltend Naturfasern) oder Holzverbundwerkstoffe, wobei die erhaltenen Produkte besonders nachhaltig sind.

Aus der Verwendung entsteht ein Artikel enthaltend die ausgehärtete Zusammensetzung aus der beschriebenen Epoxidharz-Zusammensetzung.

Der Artikel ist insbesondere eine Bodenbeschichtung, Wandbeschichtung, Bauteilbeschichtung, Rohrbeschichtung, Dachbeschichtung oder eine Korrosionsschutzbeschichtung, oder ein verklebter Artikel, oder ein Formkörper, insbesondere ein Composit-Material.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Beschreibung der Messmethoden:

**Gaschromatogramme** (GC) wurden gemessen im Temperaturbereich von 60 bis 320 °C mit einer Aufheizrate von 15 °C/min und 10 min Verweilzeit bei 320 °C. Die Injektortemperatur betrug 250 °C. Es wurde eine Zebron ZB-5 Säule verwendet (L = 30 m, ID = 0.25 mm, dj = 0.5 µm) bei einem Gasfluss von 1.5 ml/Min. Die Detektion erfolgte mittels Flammenionisation (FID).

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

**¹H- und ¹³C-NMR-Spektren** wurden bei Raumtemperatur auf einem Spektrometer des Typs Bruker Ascend bei 400.14 MHz (¹H) bzw. 100.63 MHz (¹³C) gemessen; die chemischen Verschiebungen δ sind angegeben in ppm relativ zu Tetramethylsilan (TMS). Kopplungskonstanten J sind angegeben in Hz. Echte und Pseudo-Kopplungsmuster wurden nicht unterschieden.

Die **Viskosität** wurde auf einem thermostatisierten Kegel-Platten-Viskosimeter Rheotec RC30 (Kegeldurchmesser 50 mm, Kegelwinkel 1°, Kegelspitze-PlattenAbstand 0.05 mm, Scherrate 10 s⁻¹) gemessen.

Die **Aminzahl** wurde durch Titration bestimmt (mit 0.1_{N} HClO₄ in Essigsäure gegen Kristallviolett).

### Verwendete Substanzen und Abkürzungen:

| | |
|---|---|
| Vanillin | EuroVanillin Supreme, RCI = 1 (von Borregaard) |
| Araldite^{®} GY 250 | Bisphenol A-Diglycidylether, EEW ca. 187 g/eq (von Huntsman) |
| Araldite^{®} DY-E | Monoglycidylether von C₁₂- bis C₁₄-Alkoholen, EEW ca. 290 g/eq (von Huntsman) |
| MXDA | 1,3-Bis(aminomethyl)benzol, AHEW 34 g/eq (von Mitsubishi Gas Chemical) |
| Dibenzyl-MXDA | N,N'-Dibenzyl-1,3-bis(aminomethyl)benzol, AHEW ca. 158.2 g/eq, hergestellt mittels reduktiver Alkylierung von MXDA und Benzaldehyd im Molverhältnis 1:2 |
| Diethylhexyl-MXDA | N,N'-Bis(2-ethylhexyl)-1,3-bis(aminomethyl)benzol, AHEW ca. 180.3 g/eq, hergestellt mittels reduktiver Alkylierung von MXDA und 2-Ethylhexanal im Molverhältnis 1:2 |
| B-EDA | N-Benzyl-1,2-ethandiamin, AHEW 50.1, hergestellt mittels reduktiver Alkylierung von 1,2-Ethandiamin und Benzaldehyd im Molverhältnis 3:1 und nachfolgender Reinigung mittels Destillation |
| Ancamine^{®} K54 | 2,4,6-Tris(dimethylaminomethyl)phenol (von Evonik) |

### Herstellung von Dialdehyden:

### 4-Hydroxy-5-methoxyisophthalaldehyd (= 5-Formylvanillin)

In einem Rundkolben wurden 100.61 g (0.661 mol) Vanillin (4-Hydroxy-3-methoxybenzaldehyd) und 110.96 g (0.791 mol) Hexamethylentetramin (1,3,5,7-Tetraazaadamantan) unter Stickstoffatmosphäre vorgelegt und mit 500 ml Trifluoressigsäure versetzt. Die Reaktionsmischung wurde unter Rühren 5 h bei ca. 125 °C am Rückfluss gekocht. Anschliessend wurden 800 ml wässrige Salzsäure (4 M) zugegeben und eine weitere Stunde bei ca. 125 °C am Rückfluss gekocht, dann die Reaktionsmischung auf Raumtemperatur abgekühlt und mit insgesamt 600 ml Dichlormethan extrahiert. Die vereinigte organische Phase wurde über Magnesiumsulfat getrocknet, am Rotationsverdampfer eingeengt, der erhaltene feste Rückstand aus Toluol umkristallisiert und am Vakuum getrocknet. Erhalten wurden 98.15 g (0.54 mol) eines gelblichen Pulvers mit einer mittels GC (in Ethylacetat) bestimmten Reinheit von > 99 % (Retentionszeit 11.12 min).

¹H-NMR (DMSO-d6): 11.30 (br s, 1 H, Ar-OH), 10.36 (s, 1H, O=CH 3-Stellung), 9.89 (s, 1H, O=CH 1-Stellung), 7.88 (d, 1 H, Ar-H, J = 1.8), 7.61 (d, 1 H, Ar-H, J = 1.8), 3.96 (s, 3 H, OCH₃).

¹³C-NMR (CDCl₃): 55.46 (OCH₃), 113.26 (Ar-CH), 119.00 (Ar-CH), 128.08 (Ar-C-CHO 3-Stellung), 128.46 Ar-C-CHO 1-Stellung), 148.42 (Ar-C-OCH₃), 156.09 (Ar-C-OH), 188.56 (CHO 3-Stellung), 194.83 (CHO 1-Stellung) FT-IR: 3073, 3032, 2991, 2939, 2873, 2733, 2508, 2559, 1683, 1640, 1615, 1588, 1557, 1538, 1502, 1467, 1453, 1435, 1407, 1385, 1323, 1293, 1276, 1200, 1183, 1145, 1090, 1029, 1015, 982, 956, 908, 883, 830, 809, 797, 763, 732, 666.

### 4,5-Dimethoxyisophthalaldehyd

In einem Rundkolben wurden 5.01 g (27.8 mmol) 4-Hydroxy-5-methoxyisophthalaldehyd (hergestellt wie vorgängig beschrieben) unter Stickstoffatmosphäre vorgelegt, in 130 ml Dimethylformamid gelöst, mit 11.53 g Kaliumcarbonat und 0.46 g Tetrabutylammoniumiodid versetzt und während 2 h bei Raumtemperatur gerührt. Anschliessend wurden langsam 8.09 g (55.6 mmol) Dimethylsulfat zugegeben und die Reaktionsmischung bei Raumtemperatur während 24 h gerührt. Dann wurden 40 ml wässrige Natronlauge (1 M) zugegeben, die Reaktionsmischung am Rotationsverdampfer eingeengt, der erhaltene Feststoff in Wasser gelöst und mit 300 ml Ethylacetat extrahiert. Die vereinigte organische Phase wurde über Magnesiumsulfat getrocknet, am Rotationsverdampfer eingeengt und am Vakuum getrocknet. Erhalten wurden 5.61 g (26.7 mmol) eines gelblichen Pulvers mit einer mittels GC in Ethylacetat bestimmten Reinheit von > 99 % (Retentionszeit 11.49 min).

¹H-NMR (CDCl₃): 10.38 (s, 1H, O=CH 3-Stellung), 9.87 (s, 1H, O=CH 1-Stellung), 7.86 (d, 1 H, Ar-H, J = 1.92), 7.59 (d, 1 H, Ar-H, J = 1.92), 4.05 (s, 3 H, OCH₃), 3.91 (s, 3 H, OCH₃).

¹³C-NMR (CDCl₃): 55.24 (OCH₃), 61.35 (OCH₃), 113.26 (Ar-CH), 123.42 (Ar-CH), 128.42 (Ar-C-CHO 3-Stellung), 131.13 (Ar-C-CHO 1-Stellung), 152.64 (Ar-C-O), 156.49 (Ar-C-O), 188.02 (CHO 3-Stellung), 189.46 (CHO 1-Stellung).

FT-IR: 3020, 2954, 2873, 2849, 1682, 1597, 1581, 1516, 1485, 1463, 1428, 1386, 1335, 1284, 1248, 1227, 1190, 1133, 1071, 1009, 982, 934, 891, 873, 786, 764, 751.

### Herstellung von Aminen der Formel (I):

### Amin A1: 1,3-Bis(aminomethyl)-4,5-dimethoxybenzol

In einem Rundkolben wurden 49.22 g (0.6 mol) Natriumacetat und 29.09 g (0.44 mol) wässriges Hydroxylamin (50 Gewichts-% in Wasser) unter Stickstoffatmosphäre in 500 ml Wasser gelöst. Anschliessend wurden 38.38 g (0.2 mol) 4,5-Dimethoxyisophthalaldehyd (hergestellt wie vorgängig beschrieben) zugegeben, die Reaktionsmischung während 1.5 h bei ca. 110 °C am Rückfluss gekocht, im Eisbad abgekühlt und der weisse Niederschlag abfiltriert, mit 300 ml eiskaltem Wasser gewaschen und im Vakuum getrocknet. Erhalten wurden 35.54 g (0.16 mol) 4,5-Dimethoxyisophthalaldehyd-dioxim als weisses, kristallines Pulver. 20 g (0.089 mol) davon wurden in einem Rundkolben in einer Mischung aus 100 ml Ethanol und 1'200 ml 1,4-Dioxan gelöst und bei einem Wasserstoff-Druck von 80 bar, einer Temperatur von 80 °C und einem Fluss von 5 ml/min auf einer kontinuierlich arbeitenden Hydrierapparatur mit Raney-Nickel-Festbettkatalysator hydriert. Zur Reaktionskontrolle wurde mittels IR-Spektroskopie überprüft, ob die C=N Bande bei ca. 1665 cm⁻¹ verschwunden war. Darauf wurde die hydrierte Lösung am Rotationsverdampfer bei 65 °C eingeengt. Erhalten wurden 16.12 g (0.086 mol) einer gelblichen Flüssigkeit mit einer Aminzahl von 519 mg KOH/g, einem theoretischen AHEW von etwa 49.1 g/eq, einem RCI von 0.8, einer Viskosität bei 20 °C von 277 mPa·s und einer mittels GC in Ethylacetat bestimmten Gehalt an 1,3-Bis(aminomethyl)-4,5-dimethoxybenzol von ca. 92 % (Retentionszeit 14.59 min).

¹H-NMR (DMSO-d6): 6.92 (s, 1 H, Ar-H), 6.90 (s, 1 H, Ar-H), 3.79 (s, 3 H, OCH₃), 3.70 (s, 3 H, OCH₃), 3.67 (s, 2 H, CH₂-N), 3.66 (s, 2 H, CH₂-N), 1.81 (br s, 4 H, 2x NH₂).

¹³C-NMR (DMSO-d6): 41.04 (CH₂-N), 46.22 (CH₂-N), 56.00 (OCH₃), 60.48 (OCH₃), 110.32 (Ar-CH), 119.02 (Ar-CH), 137.31 (Ar-C-CH₂), 140.33 (Ar-C-CH₂), 144.89 (Ar-C-O), 152.30 (Ar-C-O).

FT-IR: 3367, 3284, 3189, 2994, 2932, 2831, 1588, 1488, 1462, 1428, 1383, 1338, 1309, 1225, 1185, 1139, 1080, 1051, 1005, 838, 775, 741, 706.

### Amin A2: 1,3-Bis(furfurylaminomethyl)-4,5-dimethoxybenzol

In einem Rundkolben wurden 10.0 g (51.5 mmol) 4,5-Dimethoxyisophthalaldehyd (hergestellt wie vorgängig beschrieben) in 400 ml Isopropylalkohol gelöst, dazu unter Rühren langsam 10.5 g (10.8 mmol) Furfurylamin zugegeben und weitere 30 min bei Raumtemperatur gerührt. Anschliessend wurde die Reaktionsmischung bei einem Wasserstoff-Druck von 70 bar, einer Temperatur von 70 °C und einem Fluss von 5 ml/min auf einer kontinuierlich arbeitenden Hydrierapparatur mit Raney-Nickel-Festbettkatalysator hydriert. Zur Reaktionskontrolle wurde mittels IR-Spektroskopie überprüft, ob die C=N Bande bei ca. 1665 cm⁻¹ verschwunden war. Darauf wurde die hydrierte Lösung am Rotationsverdampfer bei 65 °C eingeengt. Erhalten wurden 16.4 g einer klaren, gelben Flüssigkeit mit einer Aminzahl von 297 mg KOH/g, einem theoretischen AHEW von etwa 178.2 g/eq, einem RCI von 0.9, einer Viskosität bei 20 °C von 910 mPa·s und einer mittels GC bestimmten Gehalt an 1,3-Bis(furfurylaminomethyl)-4,5-dimethoxybenzol von ca. 88.4 % (Retentionszeit 18.96 min) und ca. 11.6 % Nebenprodukt (Retentionszeit 19.26 min).

FT-IR: 3324, 2935, 2867, 2834, 1589, 1488, 1455, 1428, 1359, 1310, 1227, 1180, 1145, 1067, 1008, 919, 847, 776.

### Amin A3: 2,4-Bis(dimethylaminomethyl)-6-methoxyphenol

In einem Rundkolben wurden 10 g (55 mmol) 4-Hydroxy-5-methoxyisophthalaldehyd (= 5-Formylvanillin, hergestellt wie vorgängig beschrieben), 60 g (120 mmol) Dimethylaminlösung (2M in Tetrahydrofuran) und 150 ml Tetrahydrofuran vorgelegt und mittels Eiswasser gekühlt. Es bildete sich eine orange-rote Färbung. Anschliessend wurden 35 g Natriumtriacetoxyborhydrid zugegeben und die Reaktionsmischung 1 h bei Eiswasserkühlung, dann 1 h bei Raumtemperatur und anschliessend 1 h bei 40 °C gerührt, worauf die Reaktionsmischung eine gelbliche Färbung zeigte. Anschliessend wurde die Reaktionsmischung mit 75 ml einer Kaliumcarbonatlösung (15 Gewichts-% in Wasser) versetzt und 30 min bei Raumtemperatur gerührt, worauf die Reaktionsmischung fast farblos wurde. Dann wurde die Reaktionsmischung am Rotationsverdampfer bei 80 °C eingeengt, der Rückstand in Tetrahydrofuran aufgenommen, das ungelöste Kaliumcarbonat abfiltriert und das Filtrat am Rotationsverdampfer bei 65 °C eingeengt. Erhalten wurden 12.4 g eines orangen Öls, welches im Vakuum bei 107 bis 120 °C und 250 mbar destilliert wurde, wobei 7.5 g eines gelblichen Öls mit einer Aminzahl von 467 mg KOH/g erhalten wurden.

¹H-NMR (CDCl₃): 6.77 (d, 1 H, Ar-H), 6.52 (d, 1 H, Ar-H), 3.87 (t, 3 H, OCH₃), 3.62 (t, 2 H, CH₂N), 3.32 (t, 2 H, CH₂N), 2.32 (t, 6 H, (CH₃)₂N), 2.23 (t, 6 H, (CH₃)₂N).

### Amin A4: Amingemisch enthaltend 2,4-Bis(dimethylaminomethyl)-6-methoxyphenol

In einem Rundkolben wurden 24.83 g (0.2 mol) Guajacol, 81.96 g (0.6 mol) Dimethylamin-Lösung (33 Gewichts-% in Ethanol) in 250 ml Ethanol vorgelegt und mit 18.20 g (0.6 mol) Paraformaldehyd versetzt. Das Reaktionsgemisch wurde während 10 h am Rückfluss erhitzt, anschliessend am Rotationsverdampfer bei 65 °C und Vakuum von den flüchtigen Bestandteilen befreit und dann bei 120 °C unter Vakuum destilliert, wobei 25.6 g Destillat bei einer Dampftemperatur von ca. 100 °C und 0.005 bar aufgefangen wurden. Erhalten wurden 45.3 g Destillat als gelbliche klaren Flüssigkeit mit einer Aminzahl von 452 mg KOH/g. Gemäss ¹H-NMR betrug der Gehalt an 2,4-Bis(dimethylaminomethyl)-6-methoxyphenol ca. 89 % und als Nebenprodukte war hauptsächlich 2(4)-Dimethylaminomethyl-6-methoxyphenol vorhanden.

¹H-NMR (CDCl₃): 6.75 (d, 1 H, Ar-H), 6.57 (d, 1 H, Ar-H), 3.74 (s, 3 H, OCH₃), 3.53 (s, 2 H, CH₂N), 3.24 (s, 2 H, CH₂N), 2.21 (s, 6H, (CH₃)₂N), 2.11 (2, 6H, (CH₃)₂N).

### Herstellung von Epoxidharz-Klebstoffen:

### Beispiele 1 und 2:

Als Harz-Komponente wurde Sikadur^{®}-42 HE Komponente A (reaktivverdünntes Bisphenol A-Diglycidylether, EEW 175.5 g/eq, von Sika) in der in der Tabelle 1 angegebenen Menge (in Gewichtsteilen) eingesetzt.

Als Härter-Komponente wurde das in der Tabelle 1 angegebene Amin in der angegebenen Menge (in Gewichtsteilen) eingesetzt.

Anschliessend wurden die beiden Komponenten für jedes Beispiel mittels eines Zentrifugalmischers (SpeedMixer^{™} DAC 150, FlackTek Inc.) vermischt und unverzüglich folgendermassen geprüft:
Die **Viskosität** wurde 5 min nach dem Vermischen der Harz- und der Härter-Komponente wie beschrieben bei einer Temperatur von 20 °C gemessen.
Die **Gelierzeit** wurde bestimmt, indem die Oberfläche einer frisch vermischten Menge von ca. 3 g im Normklima mit einer Pipette aus LDPE in regelmässigen Abständen angetippt wurde, bis erstmals keine Rückstände auf der Pipette zurückblieben.

Die mechanischen Eigenschaften wurden bestimmt, indem der gemischte Klebstoff im Normklima in einer Silikonform zu hantelförmigen Stäben mit einer Dicke von 2 mm, einer Länge von 75 mm, bei einer Steglänge von 30 mm und einer Stegbreite von 4 mm, appliziert und ausgehärtet wurden. Die Zugstäbe wurden nach 1 d im Normklima aus der Form gelöst und nach insgesamt 7 d Aushärtezeit im Normklima damit die **Zugfestigkeit, Bruchdehnung** und das **E-Modul** (0.05-0.25% Dehnung) gemäss EN ISO 527 bei einer Zuggeschwindigkeit von 10 mm/min gemessen. Diese Resultate sind mit den Zusatz **"NK"** versehen. Weitere solche Zugstäbe wurden nach 1 d im Normklima aus der Form gelöst, dann 1 d in einem Umluftofen bei 120 °C nachgehärtet und während 1 d im Normklima gelagert, bevor die mechanischen Eigenschaften bestimmt wurden. Diese Resultate sind mit dem Zusatz **"120°C"** versehen. Weitere solche Zugstäbe wurden nach 1 d im Normklima aus der Form gelöst, dann 1 d in einem Umluftofen bei 120 °C nachgehärtet, dann während 5 Tagen bei Raumtemperatur in Wasser gelagert, dann mit einem Hygienetuch abgetupft und 1 d im Normklima gelagert, bevor die mechanischen Eigenschaften bestimmt wurden. Diese Resultate sind mit dem Zusatz "**H₂O**" versehen.

Der Tg-Wert (Glasübergangstemperatur) wurde bestimmt mittels DMTA-Messungen an zylindrischen Proben (Höhe 2 mm, Durchmesser 10 mm), welche wie für die Zugfestigkeit beschrieben gelagert waren, mit einem Mettler DMA/SDTA 861e Gerät, Messung im Schermodus mit 10 Hz Anregungsfrequenz und 5 K/min Aufheizrate. Die Proben wurden auf -70 °C abgekühlt und unter Bestimmung des komplexen Elastiztätsmoduls M* [MPa] auf 200 °C erwärmt, wobei ein Maximum in der Kurve für den Verlustwinkel "tan δ" als T_{g}-Wert abgelesen wurde.

Die Resultate sind in Tabelle 1 angegeben.

Vergleichsbeispiele sind mit **"(Ref.)"** bezeichnet.

**Tabelle 1: Zusammensetzung und Eigenschaften der Beispiele 1 und 2.**

| **Beispiel** | | | | **1** | **2 (Ref.)** |
|---|---|---|---|---|---|
| **Harz-Komponente:** | | | | | |
| | Sikadur^{®}-42 HE Komponente A | | | 175.5 | 175.5 |
| **Härter-Komponente:** | | | | | |
| | | Amin **A1** ¹ | | 49.1 | - |
| | | MXDA | | - | 34.0 |
| Viskosität (5') [Pa·s] | | | | 1.47 | 0.74 |
| Gelierzeit | | | | 1.5 h | > 4 h |
| Zugfestigkeit [MPa] | | | NK | 46.7 | 58.1 |
| | | | 120°C | 72.9 | 68.0 |
| | | | H₂O | 66.0 | 66.3 |
| Bruchdehnung | | | NK | 1.6 | 2.3 |
| | | | 120°C | 7.7 | 6.8 |
| | | | H₂O | 6.2 | 6.1 |
| E-Modul [MPa] | | | NK | 3320 | 3160 |
| | | | 120°C | 3120 | 2995 |
| | | | H₂O | 2980 | 3070 |
| Tg [°C] | | | NK | 62 | 58 |
| | | | 120°C | 88 | 84 |
| | | | H₂O | 82 | 82 |

| | | | | | |
|---|---|---|---|---|---|
| ¹ hergestellt wie vorgängig beschrieben | | | | | |

### Herstellung von Epoxidharz-Beschichtungen:

### Beispiele 3 bis 10:

Für jedes Beispiel wurden die in den Tabellen 2 und 3 angegebenen Inhaltsstoffe der Harz-Komponente in den angegebenen Mengen (in Gewichtsteilen) mittels des Zentrifugalmischers vermischt und unter Ausschluss von Feuchtigkeit aufbewahrt.

Ebenso wurden die in den Tabellen 2 und 3 angegebenen Inhaltsstoffe der Härter-Komponente verarbeitet und aufbewahrt.

Anschliessend wurden die beiden Komponenten für jedes Beispiel mittels des Zentrifugalmischers vermischt und unverzüglich folgendermassen geprüft:
Die **Viskosität** und die **Gelierzeit** wurden wie für Beispiel 1 beschrieben bestimmt.
Die **Shore D** Härte wurde bestimmt nach DIN 53505 an zwei zylindrischen Prüfkörpern (Durchmesser 20 mm, Dicke 5 mm), wobei einer im Normklima und einer bei 8 °C und 80% relativer Feuchtigkeit gelagert und die Härte jeweils nach 1 d und nach 2 d gemessen wurde.

Weiterhin wurde ein Film in einer Schichtdicke von 500 µm auf eine Glasplatte aufgezogen und dieser im Normklima gelagert bzw. ausgehärtet. An diesem Film wurde die **Königshärte** (Pendelhärte nach König nach DIN EN ISO 1522) nach 1 d, 2 d, 7 d und nach 14 d bestimmt (**1d NK**), (**2d NK**), (**7d NK**), (**14d NK**). Nach 14 d wurde der **Aspekt** (**NK**) des Films beurteilt. Als "schön" wurde ein klarer Film bezeichnet, welcher eine glänzende und nichtklebrige Oberfläche ohne Struktur aufwies. Als "Struktur" wird dabei jegliche Art von Zeichnung oder Muster auf der Oberfläche bezeichnet.

Ein weiterer Film wurde in einer Schichtdicke von 500 µm auf eine Glasplatte aufgezogen und dieser unmittelbar nach dem Applizieren während 7 d bei 8 °C und 80% relativer Feuchtigkeit und anschliessend während 2 Wochen im Normklima gelagert, beziehungsweise ausgehärtet. 24 Stunden nach der Applikation wurde ein Flaschendeckel aus Polypropylen auf den Film aufgesetzt, unter welchem ein feuchter Schwamm platziert war. Nach weiteren 24 Stunden wurden der Schwamm und der Deckel entfernt und an einer neuen Stelle des Films platziert, wo sie nach 24 Stunden wieder entfernt und neu platziert wurden, insgesamt 4 mal. Anschliessend wurde der Aspekt dieses Films beurteilt (in den Tabellen mit **"Aspekt (8°/80%)"** bezeichnet), auf die gleiche Weise wie für den Aspekt (NK) beschrieben. Dabei wurde jeweils auch die Anzahl und Art der sichtbaren Marken angegeben, die im Film durch den feuchten Schwamm entstanden waren. Als **"Marken"** wurde die Anzahl weiss verfärbte Flecken angegeben. Als "(1)" wurde ein schwacher, weiss verfärbter Fleck bezeichnet. Als "1" wurde ein deutlicher, weiss verfärbter Fleck bezeichnet. An den so ausgehärteten Filmen wurde wiederum die Königshärte bestimmt, jeweils nach 7 Tagen bei 8 °C und 80% relativer Feuchtigkeit (**Königsh. (7d 8°/80%)**), dann nach weiteren 2 Tagen im **NK** (**Königsh. (+2d NK)**) bzw. 7 Tagen im **NK** (**Königsh. (+7d NK)**) bzw. 14d im **NK** (**Königsh. (+14d NK)**).

Die Resultate sind in den Tabellen 2 und 3 angegeben.

Vergleichsbeispiele sind mit **"(Ref.)"** bezeichnet.

**Tabelle 2: Zusammensetzung und Eigenschaften der Beispiele 3 bis 7.**

| **Beispiel** | | | **3 (Ref.)** | **4** | **5** | **5a** | **6 (Ref.)** | **7 (Ref.)** |
|---|---|---|---|---|---|---|---|---|
| **Harz-Komponente:** | | | | | | | | |
| | Araldite^{®} GY-250 | | 167.2 | 167.2 | 167.2 | 167.2 | 167.2 | 167.2 |
| | Araldite^{®} DY-E | | 31.8 | 31.8 | 31.8 | 31.8 | 31.8 | 31.8 |
| **Härter-Komponente:** | | | | | | | | |
| | | MXDA | 34.0 | - | - | - | | - |
| | | Amin **A1** ¹ | - | 49.1 | - | - | | - |
| | | Amin **A3** ¹ | - | - | 2.0 | - | | - |
| | | Amin **A4** ¹ | - | - | - | 2.0 | | - |
| | | B-EDA | - | - | 50.1 | 50.1 | 50.1 | 50.1 |
| | Ancamine^{®} K54 | | - | - | - | - | 2.0 | - |
| Viskosität (5') [Pa·s] | | | n.b. | n.b. | 0.24 | 0.22 | 0.22 | 0.23 |
| Gelierzeit | | | n.b. | n.b. | 5 h | 5 h | 5 h | 5 h |
| Shore D | | (1d NK) | n.b. | n.b. | 72 | 78 | 68 | 60 |
| | | (2d NK) | | | 77 | 79 | 71 | 62 |
| Shore D | | (1d 8°/80%) | n.b. | n.b. | n.m.² | n.m.² | n.m.² | n.m.² |
| | | (2d 8°/80%) | | | 55 | 58 | 76 | 79 |
| Königshärte [s] | | (1d NK) | 11 | 74 | 164 | 91 | 116 | 52 |
| | | (2d NK) | 13 | 148 | 183 | 141 | 157 | 131 |
| | | (7d NK) | 16 | 167 | 190 | 188 | 206 | 142 |
| | | (14d NK) | 22 | 167 | 205 | 190 | 208 | 145 |
| Aspekt (NK) | | | trüb, leicht klebrig | leichte Struktur | schön | schön | schön | schön |
| Königsh. [s] | | (7d 8°/80%) | n.m.³ | 39 | 45 | 36 | 55 | 31 |
| | | (+2d NK) | n.b. | n.b. | 134 | 99 | 101 | 63 |
| | | (+7d NK) | n.b. | n.b. | 188 | 145 | 143 | 123 |
| | | (+14d NK) | n.m.³ | 76 | 188 | 147 | 174 | 169 |
| Aspekt (8°/80%) | | | trüb, klebrig | leicht trüb | schön | schön | schön | schön |
| Marken | | | 4 | 4 | (1) | (1) | (1) | (1) |

| | | | | | | | | |
|---|---|---|---|---|---|---|---|---|
| ¹ hergestellt wie vorgängig beschrieben ² nicht messbar (zu weich) ³ nicht messbar (klebrig) "n.b." steht für "nicht bestimmt" | | | | | | | | |

**Tabelle 3: Zusammensetzung und Eigenschaften der Beispiele 8 bis 10.**

| **Beispiel** | | | **8** | **9 (Ref.)** | **10 (Ref.)** |
|---|---|---|---|---|---|
| **Harz-Komponente:** | | | | | |
| | Araldite^{®} GY-250 | | 187.0 | 187.0 | 187.0 |
| **Härter-Komponente:** | | | | | |
| | Amin **A2** ¹ | | 178.2 | - | - |
| | Dibenzyl-MXDA | | - | 158.2 | - |
| | Diethylhexyl-MXDA | | - | - | 180.3 |
| Viskosität (5') [Pa·s] | | | 4.3 | 1.2 | 0.2 |
| Shore D | | (1d NK) | n.m.² | n.m.² | n.m.² |
| | | (2d NK) | 50 | n.m.³ | n.m.² |

| | | | | | |
|---|---|---|---|---|---|
| ¹ hergestellt wie vorgängig beschrieben ² zu weich ³ zu spröd/brüchig | | | | | |

### Herstellung von Polyurethanklebstoffen mit hoher Standfestigkeit bei der Applikation:

### Beispiele 11 bis 13:

Für jedes Beispiel wurden die in Tabelle 4 angegebenen Inhaltsstoffe der Polyol-Komponente in den angegebenen Mengen (in Gewichtsteilen) mittels des Zentrifugalmischers vermischt und unter Ausschluss von Feuchtigkeit aufbewahrt. Ebenso wurden die in Tabelle 4 angegebenen Inhaltsstoffe der Isocyanat-Komponente verarbeitet und aufbewahrt.

Anschliessend wurden die beiden Komponenten für jedes Beispiel mittels des Zentrifugalmischers vermischt und unverzüglich von jeder Zusammensetzung die **Standfestigkeit** bestimmt. Dafür wurden 8 ml der frisch vermischten Masse aus einer vorne aufgeschnittenen handelsüblichen 10 ml Kunststoffspritze von oben auf ein Stück horizontal liegenden Pappkarton aufgetragen und der Pappkarton mit der applizierten Masse unverzüglich in die senkrechte Lage gekippt, so dass die applizierte Masse horizontal nach vorne stand (Nase). Anschliessend wurde das Ausmass des Absackens aus der horizontalen Lage nach unten während der Aushärtung im Normklima beurteilt. Ein sehr geringes Absacken wurde als "sehr gut" bezeichnet, ein starkes Absacken wurde als "schlecht" bezeichnet.

Die Resultate sind in Tabelle 4 angegeben.

Vergleichsbeispiele sind mit **"(Ref.)"** bezeichnet.

**Tabelle 4: Zusammensetzung und Eigenschaften der Beispiele 11 bis 13.**

| **Beispiel** | | **11** | **12 (Ref.)** | **13 (Ref.)** |
|---|---|---|---|---|
| **Polyol-Komponente:** | | | | |
| | Voranol^{®} CP 4755 ¹ | 52.2 | 52.2 | 52.2 |
| | 1,4-Butandiol | 7.4 | 7.4 | 8.4 |
| | **Amin A1** | 2.0 | - | - |
| | MXDA | - | 2.0 | - |
| | calciniertes Kaolin ² | 33.3 | 33.3 | 33.3 |
| | Molekularsieb 3Å | 4.9 | 4.9 | 4.9 |
| | DABCO^{®} 33 LV ³ | 0.2 | 0.2 | 0.2 |
| **Isocyanat-Komponente:** | | | | |
| | Desmodur^{®} CD-L ⁴ | 32.3 | 32.3 | 32.3 |
| | **Polymer-1** ⁵ | 46.2 | 46.2 | 46.2 |
| | pyrogene Kieselsäure ⁶ | 3.3 | 3.3 | 3.3 |
| Standfestigkeit | | sehr gut | sehr gut | schlecht |

| | | | | |
|---|---|---|---|---|
| ¹ EO-capped Polyoxypropylentriol, OH-Zahl 34.7 mg KOH/g (Dow) ² Satintone^{®} W (von BASF) ³ 33 Gew.% 1,4-Diazabicyclo[2.2.2]octan in Dipropylenglykol (von Evonik) ⁴ Carbodiimid-modifiziertes Diphenylmethandiisocyanat, NCO-Gehalt 29.5 Gew.% (von Covestro) ⁵ NCO-Gehalt 2.07 Gew.% hergestellt wie nachfolgend beschrieben ⁶ Aerosil^{®} 200 (von Evonik) | | | | |

Das **Polymer-1** wurde hergestellt, indem 1'300 g Polyoxypropylendiol (Acclaim^{®} 4200 N, OH-Zahl 28.5 mg KOH/g, von Covestro), 2'600 g EO-capped Polyoxypropylentriol (Voranol^{®} CP 4755, OH-Zahl 34.7 mg KOH/g, von Dow), 600 g 4,4'-Diphenylmethandiisocyanat (Desmodur^{®} 44 MC L, von Covestro) und 500 g Diisodecylphthalat nach bekanntem Verfahren bei 80 °C zu einem Isocyanatgruppen-haltigen Polymer mit einem NCO-Gehalt von 2.07 Gewichts-% umgesetzt wurden.

## Patentansprüche

1. Verwendung eines Härters enthaltend mindestens ein Amin der Formel (I) zum Vernetzen von aminreaktiven Verbindungen, 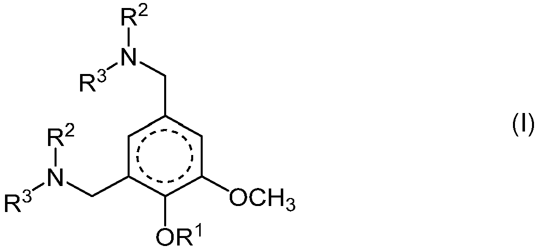 wobei 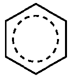 für einen Benzolring oder Cyclohexanring steht,
R¹ für H oder einen Alkylrest mit 1 bis 6 C-Atomen steht,
R² für H oder einen einwertigen organischen Rest mit 1 bis 6 C-Atomen oder einen Aminoalkylrest mit 2 bis 10 C-Atomen oder einen N-substituierten Aminoalkylrest mit 2 bis 10 C-Atomen steht, und
R³ für H oder Methyl steht.

2. Verwendung gemäss Anspruch 1, **dadurch gekennzeichnet, dass** die aminreaktive Verbindung ein Epoxidharz, Polyisocyanat, Poly(meth)acrylat, eine Polycarbonsäure oder ein Carbonsäureanhydrid ist.

3. Verwendung gemäss einem der Ansprüche 1 oder 2, **dadurch gekennzeichnet, dass** die aminreaktive Verbindung ein Epoxidharz ist.

4. Verwendung gemäss einem der Ansprüche 1 bis 3, **dadurch gekennzeichnet, dass** R¹ für Methyl steht.

5. Verwendung gemäss Anspruch 4, **dadurch gekennzeichnet, dass** R² und R³ beide für H stehen.

6. Verwendung gemäss Anspruch 4, **dadurch gekennzeichnet, dass** R³ für H steht und R² für einen einwertigen organischen Rest mit 1 bis 6 C-Atomen steht, insbesondere für Methyl, Ethyl, Propyl, Isopropyl, Butyl, Isobutyl, Cyclohexyl, Benzyl, Furfuryl oder Tetrahydrofurfuryl.

7. Verwendung gemäss Anspruch 6, **dadurch gekennzeichnet, dass** R² für Furfuryl oder Tetrahydrofurfuryl steht.

8. Verwendung gemäss einem der Ansprüche 1 bis 3, **dadurch gekennzeichnet, dass** R¹ für H und 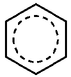 für einen Benzolring stehen.

9. Verwendung gemäss Anspruch 8, **dadurch gekennzeichnet, dass** R² und R³ beide für Methyl stehen.

10. Verwendung gemäss Anspruch 8, **dadurch gekennzeichnet, dass** R² für Furfuryl und R³ für H stehen.

11. Verwendung gemäss einem der Ansprüche 1 bis 3, **dadurch gekennzeichnet, dass** R³ für H und R² für einen linearen Aminoalkylrest mit 2 bis 6 C-Atomen, insbesondere für 2-Aminoethyl, stehen.

12. Verwendung gemäss einem der Ansprüche 1 bis 3, **dadurch gekennzeichnet, dass** R³ für H und R² für einen N-substituierten Aminoalkylrest mit 2 bis 10 C-Atomen, insbesondere für 2-Benzylaminoethyl, 2-Furfurylaminoethyl oder 3-Dimethylaminopropyl, stehen.

13. Verwendung gemäss einem der Ansprüche 1 bis 4, **dadurch gekennzeichnet, dass** im Amin der Formel (I) die Reste R² an den beiden Stickstoffatomen für jeweils unterschiedliche Reste stehen.

14. Verwendung gemäss Anspruch 3, **dadurch gekennzeichnet, dass** der Härter mindestens einen weiteren Bestandteil ausgewählt aus weiteren Aminen, welche nicht der Formel (I) entsprechen, Beschleunigern und Verdünnern enthält, insbesondere mindestens ein weiteres Amin, welches nicht der Formel (I) entspricht.

15. Epoxidharz-Zusammensetzung umfassend
- eine Harz-Komponente umfassend mindestens ein Epoxidharz und
- eine Härter-Komponente umfassend den Härter wie in einem der Ansprüche 4 bis 14 beschrieben.

16. Ausgehärtete Epoxidharz-Zusammensetzung erhalten aus der Epoxidharz-Zusammensetzung gemäss Anspruch 15 nach dem Vermischen der Harz-Komponente und der Härter-Komponente.

## Claims

1. Use of a hardener containing at least one amine of formula (I) for crosslinking of amine-reactive compounds, 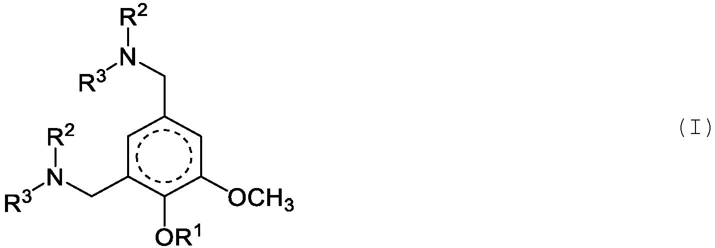 where 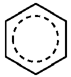 is a benzene ring or cyclohexane ring,
R¹ is H or an alkyl radical having 1 to 6 carbon atoms,
R² is H or a monovalent organic radical having 1 to 6 carbon atoms or an aminoalkyl radical having 2 to 10 carbon atoms or an N-substituted aminoalkyl radical having 2 to 10 carbon atoms and
R³ is H or methyl.

2. Use according to Claim 1, **characterized in that** the amine-reactive compound is an epoxy resin, polyisocyanate, poly(meth)acrylate, a polycarboxylic acid or a carboxylic anhydride.

3. Use according to either of Claims 1 and 2, **characterized in that** the amine-reactive compound is an epoxy resin.

4. Use according to any of Claims 1 to 3, **characterized in that** R¹ is methyl.

5. Use according to Claim 4, **characterized in that** R² and R³ are both H.

6. Use according to Claim 4, **characterized in that** R³ is H and R² is a monovalent organic radical having 1 to 6 carbon atoms, in particular methyl, ethyl, propyl, isopropyl, butyl, isobutyl, cyclohexyl, benzyl, furfuryl or tetrahydrofurfuryl.

7. Use according to Claim 6, **characterized in that** R² is furfuryl or tetrahydrofuryl.

8. Use according to any of Claims 1 to 3, **characterized in that** R¹ is H and 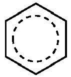 is a benzene ring.

9. Use according to Claim 8, **characterized in that** R² and R³ are both methyl.

10. Use according to Claim 8, **characterized in that** R² is furfuryl and R³ is H.

11. Use according to any of Claims 1 to 3, **characterized in that** R³ is H and R² is a linear aminoalkyl radical having 2 to 6 carbon atoms, in particular 2-aminoethyl.

12. Use according to any of Claims 1 to 3, **characterized in that** R³ is H and R² is an N-substituted aminoalkyl radical having 2 to 10 carbon atoms, in particular 2-benzylaminoethyl, 2-furfurylaminoethyl or 3-dimethylaminopropyl.

13. Use according to any of Claims 1 to 4, **characterized in that** in the amine of formula (I) the radicals R² on the two nitrogen atoms are in each case different radicals.

14. Use according to Claim 3, **characterized in that** the hardener contains at least one further constituent selected from further amines not conforming to formula (I), accelerators and diluents, in particular at least one further amine not conforming to formula (I).

15. Epoxy resin composition comprising
- a resin component comprising at least one epoxy resin and
- a hardener component comprising the hardener as described in any of Claims 4 to 14.

16. Cured epoxy resin composition obtained from the epoxy resin composition according to Claim 15 after the mixing of the resin component and the hardener component.

## Revendications

1. Utilisation d'un durcisseur contenant au moins une amine de formule (I) pour le durcissement de composés réactifs avec des amines, 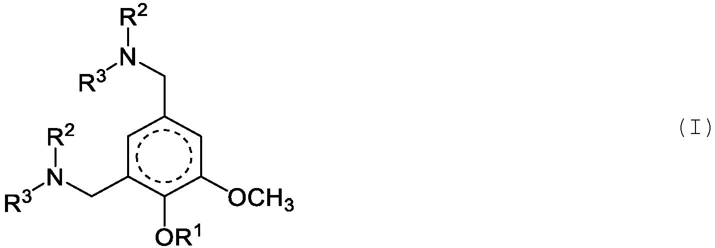 dans laquelle 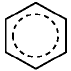 représente un cycle benzénique ou un cycle cyclohexane,
R¹ représente H ou un radical alkyle ayant de 1 à 6 atomes de carbone,
R² représente H ou un radical organique monovalent ayant de 1 à 6 atomes de carbone ou un radical aminoalkyle ayant de 2 à 10 atomes de carbone ou un radical aminoalkyle N-substitué ayant de 2 à 10 atomes de carbone, et
R³ représente H ou un groupe méthyle.

2. Utilisation selon la revendication 1, **caractérisée en ce que** le composé réactif avec des amines est une résine époxydique, un polyisocyanate, un poly(méth)acrylate, un acide polycarboxylique ou un anhydride d'acide carboxylique.

3. Utilisation selon l'une quelconque des revendications 1 et 2, **caractérisée en ce que** le composé réactif avec des amines est une résine époxydique.

4. Utilisation selon l'une quelconque des revendications 1 à 3, **caractérisée en ce que** R¹ représente un groupe méthyle.

5. Utilisation selon la revendication 4, **caractérisée en ce que** R² et R³ représentent l'un et l'autre H.

6. Utilisation selon la revendication 4, **caractérisée en ce que** R³ représente H et R² représente un radical organique monovalent ayant de 1 à 6 atomes de carbone, en particulier un groupe méthyle, éthyle, propyle, isopropyle, butyle, isobutyle, cyclohexyle, benzyle, furfuryle ou tétrahydrofurfuryle.

7. Utilisation selon la revendication 6, **caractérisée en ce que** R² représente un groupe furfuryle ou tétrahydrofurfuryle.

8. Utilisation selon l'une quelconque des revendications 1 à 3, **caractérisée en ce que** R¹ représente H et 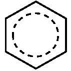 représente un cycle benzénique.

9. Utilisation selon la revendication 8, **caractérisée en ce que** R² et R³ représentent l'un et l'autre un groupe méthyle.

10. Utilisation selon la revendication 8, **caractérisée en ce que** R² représente un groupe furfuryle et R³ représente H.

11. Utilisation selon l'une quelconque des revendications 1 à 3, **caractérisée en ce que** R³ représente H et R² représente un radical aminoalkyle linéaire ayant de 2 à 6 atomes de carbone, en particulier un groupe 2-aminoéthyle.

12. Utilisation selon l'une quelconque des revendications 1 à 3, **caractérisée en ce que** R³ représente H et R² représente un radical aminoalkyle N-substitué ayant de 2 à 10 atomes de carbone, en particulier un groupe 2-benzylaminoéthyle, 2-furfurylaminoéthyle ou 3-diméthylaminopropyle.

13. Utilisation selon l'une quelconque des revendications 1 à 4, **caractérisée en ce que** dans l'amine de formule (I) les radicaux R² sur les deux atomes d'azote représentent des radicaux différents l'un de l'autre.

14. Utilisation selon la revendication 3, **caractérisée en ce que** le durcisseur contient au moins un autre constituant choisi parmi d'autres amines qui ne correspondent pas à la formule (I), les accélérateurs et les diluants, en particulier au moins une autre amine qui ne correspond pas à la formule (I).

15. Composition de résine époxydique, comprenant
- un composant résine comprenant au moins une résine époxydique et
- un composant durcisseur, comprenant le durcisseur tel que décrit dans l'une quelconque des revendications 4 à 14.

16. Composition de résine époxydique durcie, obtenue à partir de la composition de résine époxydique selon la revendication 15 après le mélange du composant résine et du composant durcisseur.
